# EUROPEAN PATENT APPLICATION

(11) **EP 2 851 778 A1**
(43) Date of publication of application: **25.03.2015**
(21) Application number: 14184497.7
(22) Date of filing: 11.09.2014
(51) Int. Cl.: G06F 3/0488, G06K 9/00, G06K 9/20, G06F 17/30

(54) **Image based search mobile terminal and method for searching**

(30) Priority: 23.09.2013 KR 20130112890
(71) Applicant: LG ELECTRONICS INC., Yeongdeungpo-Gu Seoul 150-721 (KR)
(72) Inventor: Kim, Heungnam, 137-893 Seoul (KR); Suh, Youngjung, 137-893 Seoul (KR); Lee, Joonhui, 137-893 Seoul (KR); Cho, Youngkyu, 137-893 Seoul (KR)
(74) Representative: Cabinet Plasseraud

(57) **Abstract**

The present invention relates to a mobile terminal enabling a user to more conveniently use the terminal and a method of controlling therefor. According to at least one of embodiments of the present invention, it is able to provide a user with an easy and accurate image search environment via face recognition of persons included in an image.

## Description

### BACKGROUND OF THE INVENTION

### Field of the Invention

The present invention relates to a mobile terminal enabling a user to more conveniently use the terminal and a method of controlling therefor.

### Discussion of the Related Art

A mobile terminal is a device which may be configured to perform various functions. Examples of such functions include data and voice communications, capturing images and video via a camera, recording audio, playing music files and outputting music via a speaker system, and displaying images and video on a display. Some terminals include additional functionality which supports game playing, while other terminals are also configured as multimedia players. More recently, mobile terminals have been configured to receive broadcast and multicast signals which permit viewing of contents, such as videos and television programs.

Generally, terminals can be classified into mobile terminals and stationary terminals according to a presence or non-presence of mobility. And, the mobile terminals can be further classified into handheld terminals and vehicle mount terminals according to availability for hand-carry.

There are ongoing efforts to support and increase the functionality of mobile terminals. Such efforts include software and hardware improvements, as well as changes and improvements in the structural components which form the mobile terminal.

Those terminals are recently mass produced and mass supplied in such a form as a smartphone and processing and/or storing huge data becomes available due to high hardware performance of the terminals. And, performance of a camera installed in a mobile terminal is also enhanced. This sort of performance enhancement in terms of the hardware not only increases quantity of images stored by receiving data but also increases quantity of images stored by capturing pictures.

In general, a mobile terminal provides a gallery application corresponding to an application used for reading image data. Yet, the image data are generally arranged in an order of dates that the image data are received or dates that the image data are captured by a camera in the gallery application and the gallery application shows the arranged images in sequential only. Hence, it is required to have a controlling method of the mobile terminal capable of searching for an image for which a user intends to search among a huge amount of the image data.

### SUMMARY OF THE INVENTION

Accordingly, the present invention is directed to an apparatus and method thereof that substantially obviate one or more problems due to limitations and disadvantages of the related art.

The present invention is proposed to satisfy the aforementioned necessity. One object of the present invention is to provide a mobile terminal enabling a user to search for an image data preferred by the user among many numbers of stored image data and a method of controlling therefor.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a mobile terminal includes a touch screen, a memory configured to store a plurality of images and a controller configured to recognize faces of persons included in each of a plurality of the stored images, the controller configured to output a face area designation pad in the touch screen, if an input for designating a face area on the outputted face area designation pad is received, the controller configured to search for an image matched with the designated face area.

To further achieve these objects and other advantages and in accordance with the purpose of the invention, as embodied and broadly described herein, a method of controlling a mobile terminal includes the steps of storing a plurality of images, recognizing faces of persons contained in each of a plurality of the stored images, outputting a face area designation pad in the touch screen and if an input for designating a face area on the outputted face area designation pad is received, searching for an image matched with the designated face area.

It is to be understood that both the foregoing general description and the following detailed description of the present invention are exemplary and explanatory and are intended to provide further explanation of the invention as claimed.

### BRIEF DESCRIPTION OF THE DRAWINGS

The above and other aspects, features, and advantages of the present invention will become more apparent upon consideration of the following description of preferred embodiments, taken in conjunction with the accompanying drawing figures.
FIG. 1 is a block diagram of a mobile terminal according to one embodiment of the present invention;
FIG. 2 is a front perspective diagram for one example of a mobile or portable terminal according to the present invention;
FIG. 3 is a rear perspective diagram of the mobile terminal shown in FIG. 2;
FIG. 4 is a rear perspective diagram of a surface of a rear case exposed by separating a rear cover of a mobile terminal according to one embodiment of the present invention;
FIG. 5 is a diagram for recognizing a face included in an image and displaying a recognized result (face recognition information) together with the image according to one embodiment of the present invention;
FIG. 6 is a diagram for an image search mode to search for an image according to one embodiment of the present invention;
FIG. 7 is a diagram for a method of searching for an image in accordance with a first search mode according to one embodiment of the present invention;
FIG. 8 is a diagram for a method of performing a search operation using two or more tag search words according to one embodiment of the present invention;
FIG. 9 is a diagram for a method of searching for an image in accordance with a second search mode according to one embodiment of the present invention;
FIG. 10 is a diagram for an example of a method of searching for an image based on a position of a face according to one embodiment of the present invention;
FIG. 11 is a diagram for a method of searching for an image via a plurality of face areas in a second search mode according to one embodiment of the present invention;
FIG. 12 is a diagram for a method of searching for an image in accordance with a second search mode according to one embodiment of the present invention;
FIG. 13 is a diagram for a first example of a method of searching for an image in accordance with a third search mode according to one embodiment of the present invention;
FIG. 14 is a diagram for a second example of a method of searching for an image in accordance with a third search mode according to one embodiment of the present invention;
FIG. 15 is a diagram for a third example of a method of searching for an image in accordance with a third search mode according to one embodiment of the present invention;
FIG. 16 is a diagram for an example of a method of changing a position between designated face areas according to one embodiment of the present invention;
FIG. 17 to FIG. 19 are diagrams for a fourth example of a method of searching for an image in accordance with a third search mode according to one embodiment of the present invention;
FIG. 20 is a diagram for a first example of a method of searching for an image in accordance with a fourth search mode according to one embodiment of the present invention;
FIG. 21 is a diagram for a second example of a method of searching for an image in accordance with a fourth search mode according to one embodiment of the present invention;
FIG. 22 and FIG. 23 are diagrams for a method of searching for a group picture according to one embodiment of the present invention;
FIG. 24 is a diagram for a method of designating an area and a method of performing an image search by designating the number of persons in the designated area according to one embodiment of the present invention;
FIG. 25 is a diagram for a method of searching for an image in accordance with a fifth search mode according to one embodiment of the present invention;
FIG. 26 is a diagram for a method of utilizing a search result according to one embodiment of the present invention;
FIG. 27 is a diagram for a method of utilizing a search method according to one embodiment of the present invention;
FIG. 28 is a diagram for a method of searching for an image via an object recognition according to one embodiment of the present invention;
FIG. 29 is a diagram for a method of easily sharing an image based on a face recognition according to one embodiment of the present invention;
FIG. 30 is a flowchart for a method of searching for an image based on face recognition according to one embodiment of the present invention.

### DETAILED DESCRIPTION OF THE INVENTION

In the following detailed description, reference is made to the accompanying drawing figures which form a part hereof, and which show by way of illustration specific embodiments of the invention. It is to be understood by those of ordinary skill in this technological field that other embodiments may be utilized, and structural, electrical, as well as procedural changes may be made without departing from the scope of the present invention. Wherever possible, the same reference numbers will be used throughout the drawings to refer to the same or similar parts.

As used herein, the suffixes 'module', 'unit' and 'part' are used for elements in order to facilitate the disclosure only. Therefore, significant meanings or roles are not given to the suffixes themselves and it is understood that the 'module', 'unit' and 'part' can be used together or interchangeably.

The present invention can be applicable to a various types of terminals. Examples of such terminals include mobile terminals, such as mobile phones, user equipment, smart phones, mobile computers, digital broadcast terminals, personal digital assistants, portable multimedia players (PMP) and navigators.

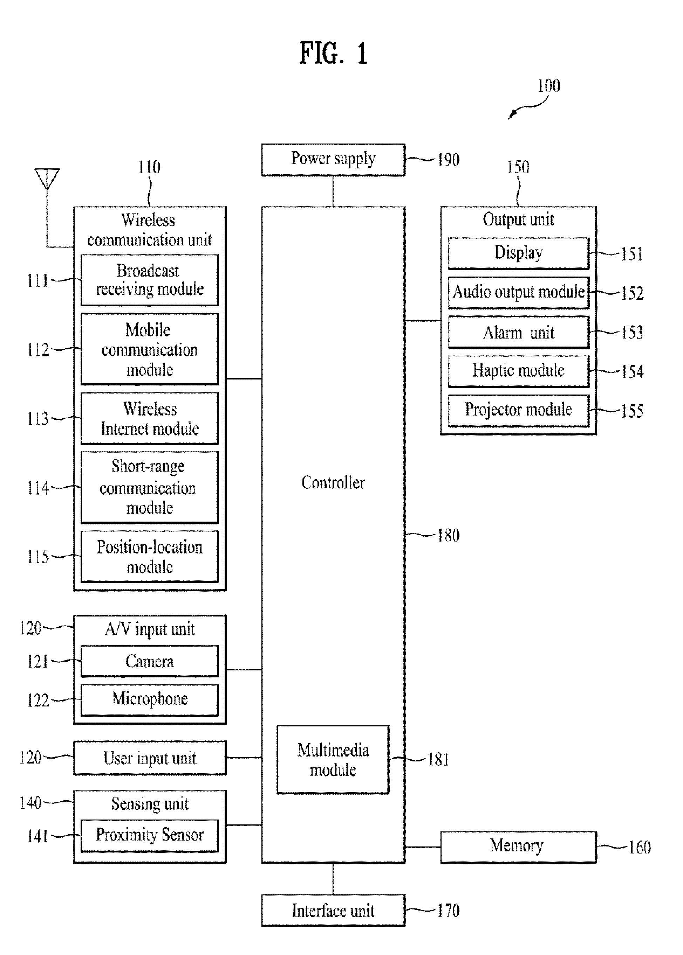

Fig. 1 is a block diagram of a mobile terminal 100 in accordance with an embodiment of the present invention. Fig. 1 shows the mobile terminal 100 according to one embodiment of the present invention includes a wireless communication unit 110, an A/V (audio/video) input unit 120, a user input unit 130, a sensing unit 140, an output unit 150, a memory 160, an interface unit 170, a controller 180, a power supply unit 190 and the like. FIG. 1 shows the mobile terminal 100 having various components, but it is understood that implementing all of the illustrated components is not a requirement. Greater or fewer components may alternatively be implemented.

In the following description, the above elements of the mobile terminal 100 are explained in sequence.

First of all, the wireless communication unit 110 typically includes one or more components which permits wireless communication between the mobile terminal 100 and a wireless communication system or network within which the mobile terminal 100 is located. For instance, the wireless communication unit 110 can include a broadcast receiving module 111, a mobile communication module 112, a wireless internet module 113, a short-range communication module 114, a position-location module 115 and the like.

The broadcast receiving module 111 receives a broadcast signal and/or broadcast associated information from an external broadcast managing server via a broadcast channel.

The broadcast channel may include a satellite channel and a terrestrial channel.

The broadcast managing server generally refers to a server which generates and transmits a broadcast signal and/or broadcast associated information or a server which is provided with a previously generated broadcast signal and/or broadcast associated information and then transmits the provided signal or information to a terminal. The broadcast signal may be implemented as a TV broadcast signal, a radio broadcast signal, and a data broadcast signal, among others. If desired, the broadcast signal may further include a broadcast signal combined with a TV or radio broadcast signal.

At least two broadcast receiving modules 111 can be provided to the mobile terminal 100 in pursuit of simultaneous receptions of at least two broadcast channels or broadcast channel switching facilitation.

The broadcast associated information includes information associated with a broadcast channel, a broadcast program, a broadcast service provider, etc. And, the broadcast associated information can be provided via a mobile communication network. In this case, the broadcast associated information can be received by the mobile communication module 112.

The broadcast associated information can be implemented in various forms. For instance, broadcast associated information may include an electronic program guide (EPG) of digital multimedia broadcasting (DMB) and electronic service guide (ESG) of digital video broadcast-handheld (DVB-H).

The broadcast receiving module 111 may be configured to receive broadcast signals transmitted from various types of broadcast systems. By nonlimiting example, such broadcasting systems include digital multimedia broadcasting-terrestrial (DMB-T), digital multimedia broadcasting-satellite (DMB-S), digital video broadcast-handheld (DVB-H), DVB-CBMS, OMA-BCAST, the data broadcasting system known as media forward link only (MediaFLO®) and integrated services digital broadcast-terrestrial (ISDB-T). Optionally, the broadcast receiving module 111 can be configured suitable for other broadcasting systems as well as the above-explained digital broadcasting systems.

The broadcast signal and/or broadcast associated information received by the broadcast receiving module 111 may be stored in a suitable device, such as a memory 160.

The mobile communication module 112 transmits/receives wireless signals to/from one or more network entities (e.g., base station, external terminal, server, etc.) via a mobile network such as GSM(Gobal System for Mobile communications), CDMA(Code Division Multiple Access), WCDMA(Wideband CDMA) and so on. Such wireless signals may represent audio, video, and data according to text/multimedia message transceivings, among others.

The wireless internet module 113 supports Internet access for the mobile terminal 100. This module may be internally or externally coupled to the mobile terminal 100. In this case, the wireless Internet technology can include WLAN(Wireless LAN) (Wi-Fi), Wibro (Wireless broadband), Wimax (World Interoperability for Microwave Access), HSDPA(High Speed Downlink Packet Access), GSM, CDMA, WCDMA, LTE (Long Term Evolution) etc.

Wireless internet access by Wibro, HSPDA, GSM, CDMA, WCDMA, LTE or the like is achieved via a mobile communication network. In this aspect, the wireless internet module 113 configured to perform the wireless internet access via the mobile communication network can be understood as a sort of the mobile communication module 112.

The short-range communication module 114 facilitates relatively short-range communications. Suitable technologies for implementing this module include radio frequency identification (RFID), infrared data association (IrDA), ultra-wideband (UWB), as well at the networking technologies commonly referred to as Bluetooth and ZigBee, to name a few.

The position-location module 115 identifies or otherwise obtains the location of the mobile terminal 100. If desired, this module may be implemented with a global positioning system (GPS) module.

According to the current technology, the GPS module 115 is able to precisely calculate current 3-dimensional position information based on at least one of longitude, latitude and altitude and direction (or orientation) by calculating distance information and precise time information from at least three satellites and then applying triangulation to the calculated information. Currently, location and time informations are calculated using three satellites, and errors of the calculated location position and time informations are then amended using another satellite. Besides, the GPS module 115 is able to calculate speed information by continuously calculating a real-time current location.

Referring to FIG. 1, the audio/video (A/V) input unit 120 is configured to provide audio or video signal input to the mobile terminal 100. As shown, the A/V input unit 120 includes a camera 121 and a microphone 122. The camera 121 receives and processes image frames of still pictures or video, which are obtained by an image sensor in a video call mode or a photographing mode. And, the processed image frames can be displayed on the display 151.

The image frames processed by the camera 121 can be stored in the memory 160 or can be externally transmitted via the wireless communication unit 110. Optionally, at least two cameras 121 can be provided to the mobile terminal 100 according to environment of usage.

The microphone 122 receives an external audio signal while the portable device is in a particular mode, such as phone call mode, recording mode and voice recognition. This audio signal is processed and converted into electric audio data. The processed audio data is transformed into a format transmittable to a mobile communication base station via the mobile communication module 112 in case of a call mode. The microphone 122 typically includes assorted noise removing algorithms to remove noise generated in the course of receiving the external audio signal.

The user input unit 130 generates input data responsive to user manipulation of an associated input device or devices. Examples of such devices include a keypad, a dome switch, a touchpad (e.g., static pressure/capacitance), a jog wheel, a jog switch, etc.

The sensing unit 140 provides sensing signals for controlling operations of the mobile terminal 100 using status measurements of various aspects of the mobile terminal. For instance, the sensing unit 140 may detect an open/close status of the mobile terminal 100, relative positioning of components (e.g., a display and keypad) of the mobile terminal 100, a change of position of the mobile terminal 100 or a component of the mobile terminal 100, a presence or absence of user contact with the mobile terminal 100, orientation or acceleration/deceleration of the mobile terminal 100, and free-falling of the mobile terminal 100. As an example, consider the mobile terminal 100 being configured as a slide-type mobile terminal. In this configuration, the sensing unit 140 may sense whether a sliding portion of the mobile terminal is open or closed. Other examples include the sensing unit 140 sensing the presence or absence of power provided by the power supply 190, the presence or absence of a coupling or other connection between the interface unit 170 and an external device. And, the sensing unit 140 can include a proximity sensor 141.

The output unit 150 generates outputs relevant to the senses of sight, hearing, touch and the like. And, the output unit 150 includes the display 151, an audio output module 152, an alarm unit 153, a haptic module 154, a projector module 155 and the like.

The display 151 is typically implemented to visually display (output) information associated with the mobile terminal 100. For instance, if the mobile terminal is operating in a phone call mode, the display will generally provide a user interface (UI) or graphical user interface (GUI) which includes information associated with placing, conducting, and terminating a phone call. As another example, if the mobile terminal 100 is in a video call mode or a photographing mode, the display 151 may additionally or alternatively display images which are associated with these modes, the UI or the GUI.

The display module 151 may be implemented using known display technologies including, for example, a liquid crystal display (LCD), a thin film transistor-liquid crystal display (TFT-LCD), an organic light-emitting diode display (OLED), a flexible display and a three-dimensional display. The mobile terminal 100 may include one or more of such displays.

Some of the above displays can be implemented in a transparent or optical transmittive type, which can be named a transparent display. As a representative example for the transparent display, there is TOLED (transparent OLED) or the like. A rear configuration of the display 151 can be implemented in the optical transmittive type as well. In this configuration, a user is able to see an object in rear of a terminal body via the area occupied by the display 151 of the terminal body.

At least two displays 151 can be provided to the mobile terminal 100 in accordance with the implemented configuration of the mobile terminal 100. For instance, a plurality of displays can be arranged on a single face of the mobile terminal 100 in a manner of being spaced apart from each other or being built in one body. Alternatively, a plurality of displays can be arranged on different faces of the mobile terminal 100.

In case that the display 151 and a sensor for detecting a touch action (hereinafter called 'touch sensor') configures a mutual layer structure (hereinafter called 'touchscreen'), it is able to use the display 151 as an input device as well as an output device. In this case, the touch sensor can be configured as a touch film, a touch sheet, a touchpad or the like.

The touch sensor can be configured to convert a pressure applied to a specific portion of the display 151 or a variation of a capacitance generated from a specific portion of the display 151 to an electric input signal. Moreover, it is able to configure the touch sensor to detect a pressure of a touch as well as a touched position or size.

If a touch input is made to the touch sensor, signal(s) corresponding to the touch is transferred to a touch controller. The touch controller processes the signal(s) and then transfers the processed signal(s) to the controller 180. Therefore, the controller 180 is able to know whether a prescribed portion of the display 151 is touched.

Referring to FIG. 1, a proximity sensor (141) can be provided to an internal area of the mobile terminal 100 enclosed by the touchscreen or around the touchscreen. The proximity sensor is the sensor that detects a presence or non-presence of an object approaching a prescribed detecting surface or an object existing around the proximity sensor using an electromagnetic field strength or infrared ray without mechanical contact. Hence, the proximity sensor has durability longer than that of a contact type sensor and also has utility wider than that of the contact type sensor.

The proximity sensor can include one of a transmittive photoelectric sensor, a direct reflective photoelectric sensor, a mirror reflective photoelectric sensor, a radio frequency oscillation proximity sensor, an electrostatic capacity proximity sensor, a magnetic proximity sensor, an infrared proximity sensor and the like. In case that the touchscreen includes the electrostatic capacity proximity sensor, it is configured to detect the proximity of a pointer using a variation of electric field according to the proximity of the pointer. In this case, the touchscreen (touch sensor) can be classified as the proximity sensor.

The proximity sensor detects a proximity touch and a proximity touch pattern (e.g., a proximity touch distance, a proximity touch duration, a proximity touch position, a proximity touch shift state, etc.). And, information corresponding to the detected proximity touch action and the detected proximity touch pattern can be outputted to the touchscreen.

The audio output module 152 functions in various modes including a call-receiving mode, a call-placing mode, a recording mode, a voice recognition mode, a broadcast reception mode and the like to output audio data which is received from the wireless communication unit 110 or is stored in the memory 160. During operation, the audio output module 152 outputs audio relating to a particular function (e.g., call received, message received, etc.). The audio output module 152 is often implemented using one or more speakers, buzzers, other audio producing devices, and combinations thereof.

The alarm unit 153 is output a signal for announcing the occurrence of a particular event associated with the mobile terminal 100. Typical events include a call received event, a message received event and a touch input received event. The alarm unit 153 is able to output a signal for announcing the event occurrence by way of vibration as well as video or audio signal. The video or audio signal can be outputted via the display 151 or the audio output unit 152. Hence, the display 151 or the audio output module 152 can be regarded as a part of the alarm unit 153.

The haptic module 154 generates various tactile effects that can be sensed by a user. Vibration is a representative one of the tactile effects generated by the haptic module 154. Strength and pattern of the vibration generated by the haptic module 154 are controllable. For instance, different vibrations can be outputted in a manner of being synthesized together or can be outputted in sequence.

The haptic module 154 is able to generate various tactile effects as well as the vibration. For instance, the haptic module 154 generates the effect attributed to the arrangement of pins vertically moving against a contact skin surface, the effect attributed to the injection/suction power of air though an injection/suction hole, the effect attributed to the skim over a skin surface, the effect attributed to the contact with electrode, the effect attributed to the electrostatic force, the effect attributed to the representation of hold/cold sense using an endothermic or exothermic device and the like.

The haptic module 154 can be implemented to enable a user to sense the tactile effect through a muscle sense of finger, arm or the like as well as to transfer the tactile effect through a direct contact. Optionally, at least two haptic modules 154 can be provided to the mobile terminal 100 in accordance with the corresponding configuration type of the mobile terminal 100.

The projector module 155 is the element for performing an image projector function using the mobile terminal 100. And, the projector module 155 is able to display an image, which is identical to or partially different at least from the image displayed on the display unit 151, on an external screen or wall according to a control signal of the controller 180.

In particular, the projector module 155 can include a light source (not shown in the drawing) generating light (e.g., laser) for projecting an image externally, an image producing means (not shown in the drawing) for producing an image to output externally using the light generated from the light source, and a lens (not shown in the drawing) for enlarging to output the image externally in a predetermined focus distance. And, the projector module 155 can further include a device (not shown in the drawing) for adjusting an image projected direction by mechanically moving the lens or the whole module.

The projector module 155 can be classified into a CRT (cathode ray tube) module, an LCD (liquid crystal display) module, a DLP (digital light processing) module or the like according to a device type of a display means. In particular, the DLP module is operated by the mechanism of enabling the light generated from the light source to reflect on a DMD (digital micro-mirror device) chip and can be advantageous for the downsizing of the projector module 151.

Preferably, the projector module 155 can be provided in a length direction of a lateral, front or backside direction of the mobile terminal 100. And, it is understood that the projector module 155 can be provided to any portion of the mobile terminal 100 according to the necessity thereof.

The memory unit 160 is generally used to store various types of data to support the processing, control, and storage requirements of the mobile terminal 100. Examples of such data include program instructions for applications operating on the mobile terminal 100, contact data, phonebook data, messages, audio, still pictures (or photo), moving pictures, etc. And, a recent use history or a cumulative use frequency of each data (e.g., use frequency for each phonebook, each message or each multimedia) can be stored in the memory unit 160. Moreover, data for various patterns of vibration and/or sound outputted in case of a touch input to the touchscreen can be stored in the memory unit 160.

The memory 160 may be implemented using any type or combination of suitable volatile and non-volatile memory or storage devices including hard disk, random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, multimedia card micro type memory, card-type memory (e.g., SD memory, XD memory, etc.), or other similar memory or data storage device. And, the mobile terminal 100 is able to operate in association with a web storage for performing a storage function of the memory 160 on Internet.

The interface unit 170 is often implemented to couple the mobile terminal 100 with external devices. The interface unit 170 receives data from the external devices or is supplied with the power and then transfers the data or power to the respective elements of the mobile terminal 100 or enables data within the mobile terminal 100 to be transferred to the external devices. The interface unit 170 may be configured using a wired/wireless headset port, an external charger port, a wired/wireless data port, a memory card port, a port for coupling to a device having an identity module, audio input/output ports, video input/output ports, an earphone port and/or the like.

The identity module is the chip for storing various kinds of information for authenticating a use authority of the mobile terminal 100 and can include User Identify Module (UIM), Subscriber Identify Module (SIM), Universal Subscriber Identity Module (USIM) and/or the like. A device having the identity module (hereinafter called 'identity device') can be manufactured as a smart card. Therefore, the identity device is connectible to the mobile terminal 100 via the corresponding port.

When the mobile terminal 110 is connected to an external cradle, the interface unit 170 becomes a passage for supplying the mobile terminal 100 with a power from the cradle or a passage for delivering various command signals inputted from the cradle by a user to the mobile terminal 100. Each of the various command signals inputted from the cradle or the power can operate as a signal enabling the mobile terminal 100 to recognize that it is correctly loaded in the cradle.

The controller 180 typically controls the overall operations of the mobile terminal 100. For example, the controller 180 performs the control and processing associated with voice calls, data communications, video calls, etc. The controller 180 may include a multimedia module 181 that provides multimedia playback. The multimedia module 181 may be configured as part of the controller 180, or implemented as a separate component.

Moreover, the controller 180 is able to perform a pattern (or image) recognizing process for recognizing a writing input and a picture drawing input carried out on the touchscreen as characters or images, respectively.

The power supply unit 190 provides power required by the various components for the mobile terminal 100. The power may be internal power, external power, or combinations thereof.

Various embodiments described herein may be implemented in a computer-readable medium using, for example, computer software, hardware, or some combination thereof. For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof. Such embodiments may also be implemented by the controller 180.

For a software implementation, the embodiments described herein may be implemented with separate software modules, such as procedures and functions, each of which perform one or more of the functions and operations described herein. The software codes can be implemented with a software application written in any suitable programming language and may be stored in memory such as the memory 160, and executed by a controller or processor, such as the controller 180.

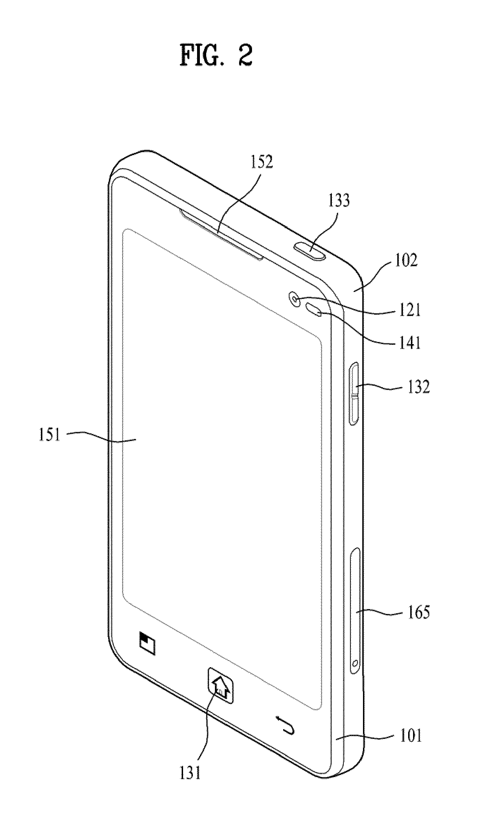

FIG. 2 is a front perspective diagram of a mobile terminal according to one embodiment of the present invention.

The mobile terminal 100 shown in the drawing has a bar type terminal body. Yet, the mobile terminal 100 may be implemented in a variety of different configurations. Examples of such configurations include folder-type, slide-type, rotational-type, swing-type and combinations thereof. For clarity, further disclosure will primarily relate to a bar-type mobile terminal 100. However such teachings apply equally to other types of mobile terminals.

Referring to FIG. 2, the mobile terminal 100 includes a case (casing, housing, cover, etc.) configuring an exterior thereof. In the present embodiment, the case can be divided into a front case 101 and a rear case 102. Various electric/electronic parts are loaded in a space provided between the front and rear cases 101 and 102. Optionally, at least one middle case can be further provided between the front and rear cases 101 and 102 in addition.

The cases 101 and 102 are formed by injection molding of synthetic resin or can be formed of metal substance such as stainless steel (STS), titanium (Ti) or the like for example.

A display 151, an audio output unit 152, a camera 121, user input units 130/131 and 132, a microphone 122, an interface 180 and the like can be provided to the terminal body, and more particularly, to the front case 101.

The display 151 occupies most of a main face of the front case 101. The audio output unit 151 and the camera 121 are provided to an area adjacent to one of both end portions of the display 151, while the user input unit 131 and the microphone 122 are provided to another area adjacent to the other end portion of the display 151. The user input unit 132 and the interface 170 can be provided to lateral sides of the front and rear cases 101 and 102.

The input unit 130 is manipulated to receive a command for controlling an operation of the terminal 100. And, the input unit 130 is able to include a plurality of manipulating units 131 and 132. The manipulating units 131 and 132 can be named a manipulating portion and may adopt any mechanism of a tactile manner that enables a user to perform a manipulation action by experiencing a tactile feeling.

Content inputted by the first or second manipulating unit 131 or 132 can be diversely set. For instance, such a command as start, end, scroll and the like is inputted to the first manipulating unit 131. And, a command for a volume adjustment of sound outputted from the audio output unit 152, a command for a switching to a touch recognizing mode of the display 151 or the like can be inputted to the second manipulating unit 132.

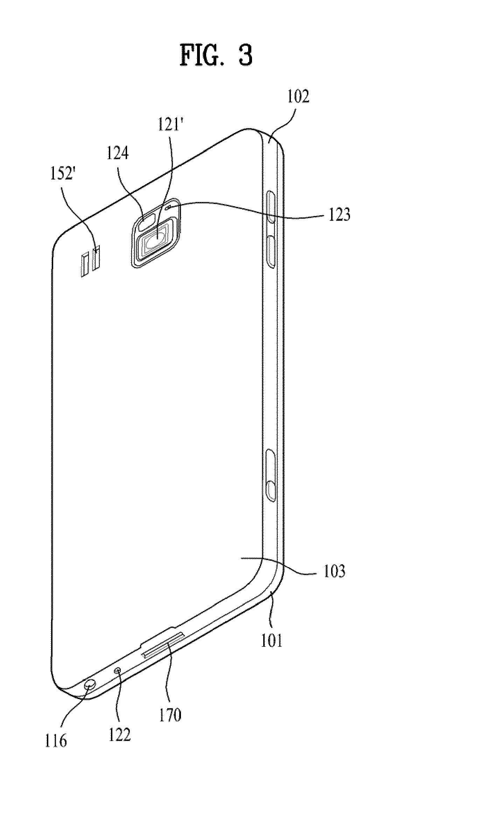

FIG. 3 is a perspective diagram of a backside of the terminal shown in FIG. 2.

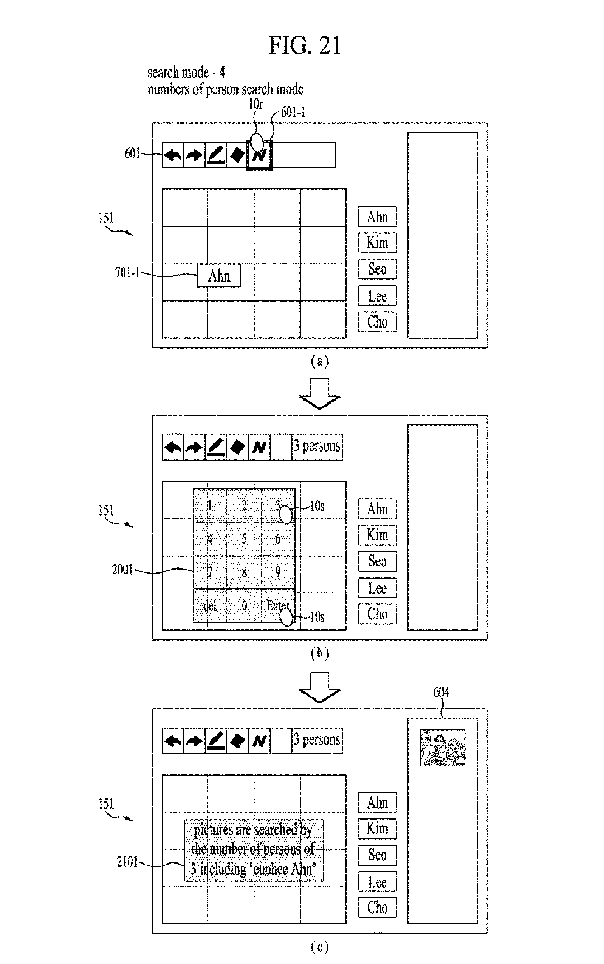

Referring to FIG. 3, a camera 121' can be additionally provided to a backside of the terminal body, and more particularly, to the rear case 102. The camera 121 has a photographing direction that is substantially opposite to that of the former camera 121 shown in FIG. 21A and may have pixels differing from those of the firmer camera 121.

Preferably, for instance, the former camera 121 has low pixels enough to capture and transmit a picture of user's face for a video call, while the latter camera 121' has high pixels for capturing a general subject for photography without transmitting the captured subject. And, each of the cameras 121 and 121' can be installed at the terminal body to be rotated or popped up.

A flash 123 and a mirror 124 are additionally provided adjacent to the camera 121'. The flash 123 projects light toward a subject in case of photographing the subject using the camera 121'. In case that a user attempts to take a picture of the user (self-photography) using the camera 121', the mirror 124 enables the user to view user's face reflected by the mirror 124.

An additional audio output unit 152' can be provided to the backside of the terminal body. The additional audio output unit 152' is able to implement a stereo function together with the former audio output unit 152 shown in FIG. 2 and may be used for implementation of a speakerphone mode in talking over the terminal.

A broadcast signal receiving antenna 116 can be additionally provided to the lateral side of the terminal body as well as an antenna for communication or the like. The antenna 116 constructing a portion of the broadcast receiving module 111 shown in FIG. 1 can be retractably provided to the terminal body.

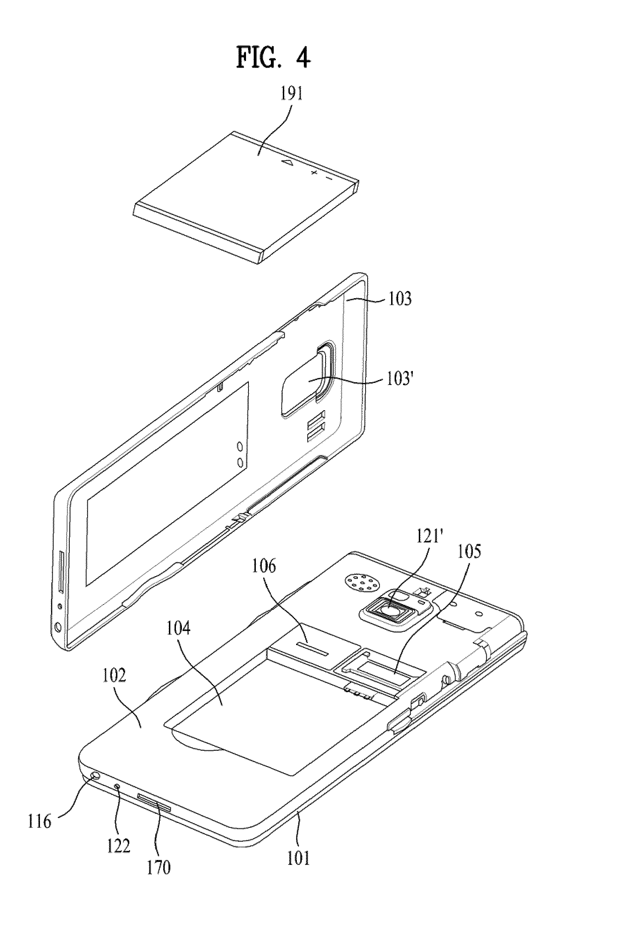

FIG. 4 is a rear perspective diagram of a surface of a rear case exposed by separating a rear cover of a mobile terminal according to one embodiment of the present invention.

Referring to FIG. 4, a front case 101, a rear case 102, a rear cover (or a battery cover) 103, a camera 121', an interface unit 170, a microphone 122, a speaker module 154, an audio output unit 152', a battery 191, a battery loading unit 104, a USIM card loading unit 166, and a memory card loading unit 167 are provided.

A space for mounting such an external part as the battery loading unit 104, the USIM card loading unit 105, the memory card loading unit 106 and the like can be provided to a surface of the rear case 102. Generally, the external part loaded on the surface of the rear case 102 is provided to extend functions of the mobile terminal 100 in order to meet the diversified functions of the mobile terminal and a variety of the consumer's needs.

As the performance of the mobile terminal gets diverse, the battery 191 can be configured as a replaceable type, as shown in FIG. 4, to complement a considerable amount of power consumption. In case that the replaceable type is adopted, the battery loading unit 104 is formed on the surface of the rear case 102 to enable a user to detach the corresponding battery. In this case, a contact terminal is provided to the battery loading unit 104 to be electrically connected to a part installed within the case.

The USIM card loading unit 166 or the memory card loading unit 167 may be provided, as shown in FIG. 4, next to the battery loading unit 104. Alternatively, the USIM card loading unit 166 or the memory card loading unit 167 may be provided to a bottom surface of the battery loading unit 104. Hence, the battery 191 can be externally exposed if the battery 191 is unloaded from the battery loading unit 104. In this case, since a size of the battery loading unit 104 is extensible, the battery 191 can be oversized.

Although FIG. 4 shows the configuration that the USIM card loading unit 166 or the memory card loading unit 167 is mounted on a backside of the rear case 102, it can be inserted in or separated from the mobile terminal 100 in a manner of being inserted in a lateral side of the rear case 102.

The rear cover 103 covers the surface of the rear case 102. Hence, the rear cover 103 can fix the battery, 191, the USIM card, the memory card and the lime not to be separated from the rear case 102 and also protects the external parts from external shocks or particles. Recently, a waterproof function is added to the mobile terminal 100. In order to prevent the external parts from contacting with water, the mobile terminal 100 can further include a waterproof structure. Hence, when rear case 102 and the rear cover 103 are connected to each other, the waterproof structure can seal up the gap between the rear case 102 and the rear cover 103.

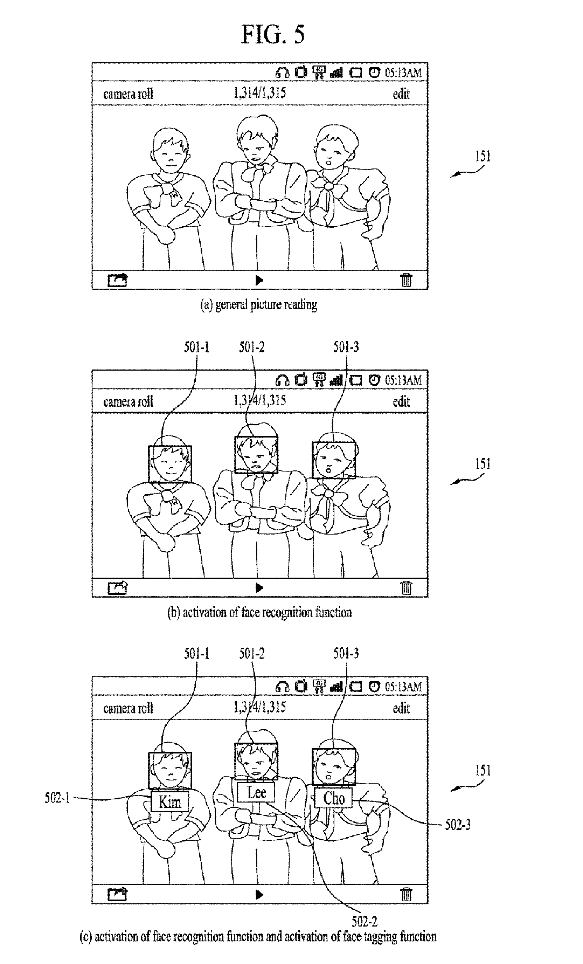

In the following, a face recognition within an image and face recognition information are explained with reference to FIG. 5.

For clarity of drawings, a case forming an exterior of the mobile terminal 100 is omitted in a drawing used for explaining one embodiment of the present invention to be explained in the following. Instead, a diagram of a screen, which is displayed in a touch screen 151 of the mobile terminal 100, is depicted only.

FIG. 5 is a diagram for recognizing a face included in an image and displaying a recognized result (face recognition information) together with the image according to one embodiment of the present invention.

FIG. 5(a) is a diagram for generally reading a picture and an image displayed in FIG, 5(a) includes 3 persons. The controller 180 according to one embodiment of the present invention can recognize a face of each person included in the image via an algorithm capable of analyzing faces belong to the image. The algorithm analyzes eyes, a nose, or a mouth of a person in the image and can recognize a face of the person using the analyzed eyes, the nose, or the mouth. In the following detailed explanation explaining one embodiment of the present invention, a result recognized by the algorithm shall be called face recognition information. The face recognition information may include relative location information of the recognized face in a whole area to which the image is outputted. And, if a plurality of persons appear in a picture, the face recognition information may correspond to individual information on at least one person among a plurality of the persons. Hence, if a plurality of persons appear in an image, the face recognition information of the image may include a face recognition result for at least one person among a plurality of the persons.

FIG. 5(b) is a diagram for distinctively displaying recognized faces. The controller 180 can also output face indicators 501-1 to 501-3 on the recognized faces in an outputted picture. In particular, the controller 180 can also display the face indicators 501-1 to 501-3 together with the output of the picture based on location information of faces included in the analyzed face recognition information.

Moreover, the algorithm can distinguish a person from the persons whose faces are recognized in a manner of analyzing a feature of eyes, a node, or a mouth, which varies according to every single person. In particular, the controller 180 can determine whether a face recognized in the picture is identical to a face appearing in pictures pre-stored in the contact in manner of comparing the faces with each other. By doing so, if it is determined that the face recognized in the picture is identical to the face pre-stored in the contact, the controller 180 may further display additional information on a corresponding person which is stored in the contact of the person.

In particular, the controller 180 analyzes a face in an image, identifies the face, and may be then able to match the face with specific contact information. And, the matched contact information can be additionally displayed in the image.

As depicted in an example of FIG. 5(c), the controller 180 can output a name tag 502-1 to 502-3 for the persons whose faces are recognized as the additional information together with the picture, as an example of the additional information.

A method of searching for an image according to one embodiment of the present invention intends to provide environment capable of more easily searching for an image based on the aforementioned face recognition result. And, the method proposes a method capable of further searching for additional information pre-stored in the contact based on the face recognition result and capable of searching for an image based on the searched additional information. In particular, if a specific person included in an image is identified as a person stored in the contact, the controller 180 can further store contact information of the specific person as tag information on the image. In this case, such various information capable of being generally included in the contact information as a name of the person, a telephone number, a home address, and the like can be included in the contact information.

Meanwhile, the aforementioned face recognition result can be stored as tag information together with the image or a picture search operation can be performed in a manner of performing a face recognition whenever a search for an image is performed. And, the controller 180 may store the additional information, which is searched based on the face recognition result, as the tag information.

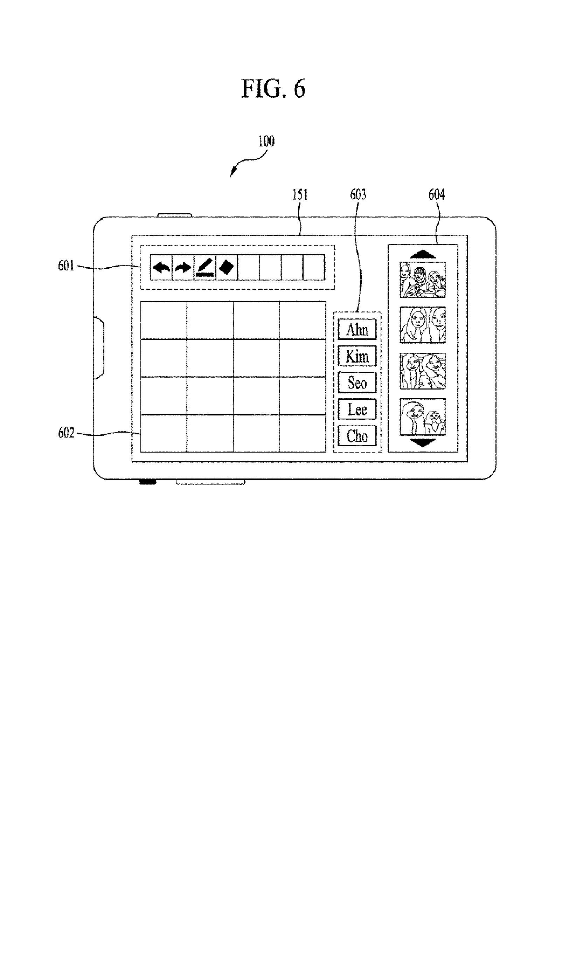

FIG. 6 is a diagram for an image search mode to search for an image according to one embodiment of the present invention.

In an image search mode according to one embodiment of the present invention, a drawing tool area 601, a face area designation pad 602, a tag search word list 603 and a search result area 604 can be outputted.

The face area designation pad 602 is an area used for receiving an input of a search condition according to one embodiment of the present invention. In particular, the face area designation pad may correspond to a drawing pad capable of inputting a tag search word or drawing a position in which a face is appearing.

In particular, the face area designation pad 602 is an area used for designating a face area as a search condition according to one embodiment of the present invention. When a user generally recalls a preferred image, the user may firstly recall a person included in the image and a position of the person included in the image. Hence, one embodiment of the present invention proposes a method of searching for an image using a relative position in which a face exists among an area where a picture is outputted. In particular, if a face area is designated on the face area designation pad 602 by a user, the controller 180 can search for pictures whose face are outputted in a position corresponding to the designated face area.

Moreover, the controller 180 according to one embodiment of the present invention can display one of the images for which a search has performed in the face area designation pad 602.

The drawing tool area 601 may include tool items used for designating a face area on the face area designation pad 602 by a user. The tool items may include a pencil tool, an eraser tool, a going backward tool, a going forward tool and the like.

A user may designate a prescribed area using the pencil tool. For instance, if an input for forming a looped curve is received using the pencil tool, the controller 180 can recognize an inner area of the formed looped curved as a face area corresponding to the aforementioned search condition.

The user may delete a path and/or the looped curve formed by using the pencil tool using the eraser tool.

In the following description, explanation on items, which are not necessary for explaining embodiment of the present invention, among the tools included in the drawing tool area 601 is omitted.

The tag search word list 603 indicates a list (e.g., list of names of persons stored in the contact) of tag search words according to one embodiment of the present invention. The tag search word list 603 may correspond to at least one selected from the group consisting of a most frequently used tag search word, a recently searched tag search word and a user configuration list.

The search result area 604 corresponds to an area outputting at least one image searched by the controller 180 according to one embodiment of the present invention. If a searched result includes a plurality of images, the controller 180 can display a plurality of the images in the search result area 604. If all of a plurality of the images cannot be displayed in the search result area since a space of the search result area is not sufficient, a scroll operation can be used for displaying all of a plurality of the images.

In the following description, embodiments of the present invention are explained based on the diagram of the aforementioned image search mode with reference to FIG. 6.

### First search mode - tag search mode

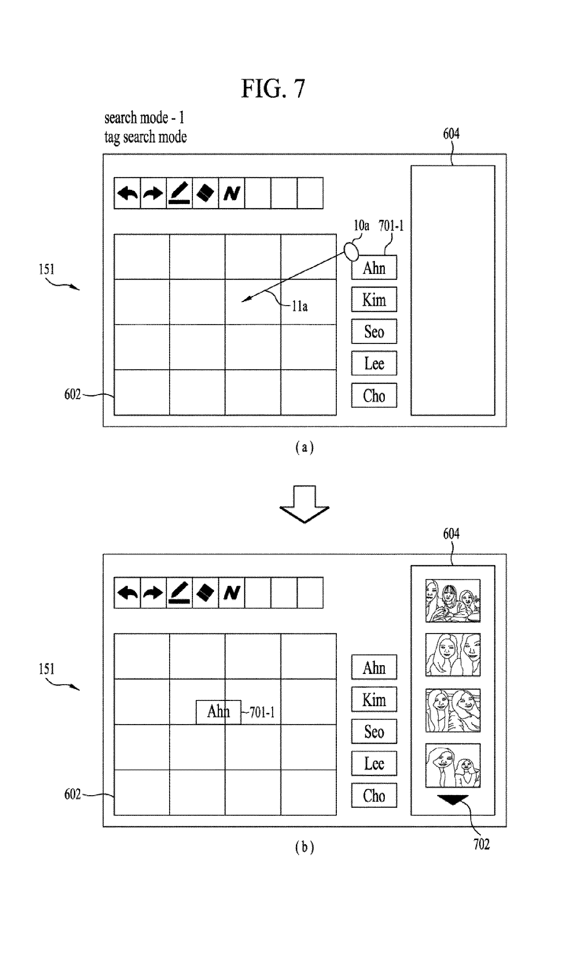

FIG. 7 is a diagram for a method of searching for an image in accordance with a first search mode according to one embodiment of the present invention.

In a first search mode, it is proposed that an image search is performed based on a tag search word. In particular, a name of a specific person, a telephone number, or the like is used as a search word and environment capable of searching for an image (image including a face of the specific person) including the specific person corresponding to the search word is provided in the first search mode. In this case, names of persons included in the image and/or telephone numbers should be stored as tag information on the image. According to one embodiment of the present invention, the names and/or telephone numbers can be stored as the tag information on the image in a manner of performing the face recognition and the contact matching as mentioned in the foregoing description.

As an example, when a user intends to search for an image including a person whose name is 'Eunhee Ahn', the user can input 'Eunhee Ahn' as a tag search word. If 'Eunhee Ahn' is inputted as the tag search word, the controller 180 according to one embodiment of the present invention can search for images including 'Eunhee Ahn' as tag information among stored images.

In particular, one embodiment of the present invention proposes to search for the tag information to search for whether a specific person is included in an image. As mentioned in the foregoing description, if a face recognition operation is performed for the specific person belonging to the image, additional information (name, address and the like) on the person can be stored as the tag information on the image via a comparison with an image of the pre-stored contact.

Moreover, in one embodiment of the present invention, if inputs 10a and 11a for selecting a prescribed tag search word from a tag search word list 603 are received, the controller 180 can perform an image search based on the selected tag search word. In this case, the inputs for selecting the prescribed search word may correspond to an input touching 10a a preferred tag search word 701-1 among the tag search word list 603 and dragging 11a the tag search word to a direction of the face area designation pad 602 while the touch 10a is maintained. In particular, in inputting a tag search word, since a direct input of the tag search word via typing may be inconvenient, one embodiment of the present invention can make the tag search word input to be more convenient in a manner of outputting the tag search word list 603 and selecting one tag search word from the tag search word list 603.

FIG. 7 (b) shows a screen outputting a search result in case that a tag search word 701-1 such as 'Eunhee Ahn' is selected from the tag search word list 603. As depicted in FIG. 7 (b), if the tag search word 701-1 such as 'Eunhee Ahn' is selected, the controller 180 can control the tag search word 701-1 to be outputted in the face area designation pad 602.

The controller 180 searches for an image including such tag information as 'Eunhee Ahn' among a plurality of images stored in the memory 160 and can output searched result image(s) in the search result area 604. As depicted in an example of FIG. 7 (b), 4 images are outputted in the search result area 604 and an indicator indicating that there further exists a searched image can be further outputted in the bottom of the 4 images. In this case, a user can read more search result images in a manner of scrolling the search result area 604.

Meanwhile, in embodiments of the present invention, if a search command is received from the user, the controller 180 may perform a search operation in response to the received search command. Yet, if a search condition is changed (if the search condition is added or deleted) on the face area designation pad 602, the controller may update a search result in response to the changed search condition.

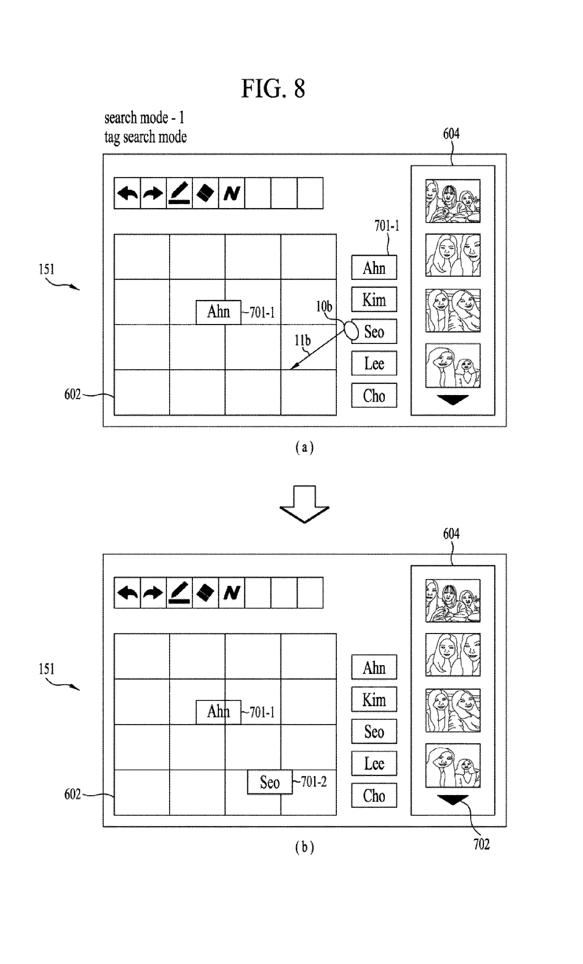

The method of performing a search operation using one tag search word is explained in FIG. 7. Yet, the search operation can be performed using two or more tag search words. Regarding this, it shall be described with reference to FIG. 8.

FIG. 8 is a diagram for a method of performing a search operation using two or more tag search words according to one embodiment of the present invention.

Referring to FIG. 8 (a), similar to FIG. 7 (b), such a tag search word 701-1 as 'Eunhee Ahn' is outputted in the face area designation pad 602 by the controller 180. In particular, assume that the tag search word 701-1 such as 'Eunhee Ahn' is already inputted as a search condition.

A user intends to configure an image search condition including such a person as 'Eunhee Ahn' and such a person as 'Younh jung Seo' to search for a preferred image. If the user inputs 'Eunhee Ahn' and 'Young jung Seo' in the mobile terminal 100 according to one embodiment of the present invention as tag search words, the mobile terminal searches for images including all of the inputted tags and can output the images for the user.

In particular, if inputs 10b and 11b for selecting such a tag search word 701-2 as 'Young jung Seo' in a state shown in FIG. 8 (a), the controller 180 can search for images including all of the two inputted tag search words 701-1 and 701-2. In this case, the input for selecting the tag search word may correspond to an input touching 10b a preferred tag search word 701-2 among the tag search word list 603 and dragging 11b the tag search word to a direction of the face area designation pad 602 while the touch 10b is maintained.

Similarly, as depicted in FIG. 8 (b), the controller 180 can control the tag search word such as 'Young jung Seo' to be outputted in the face area designation pad 602. And, the searched result images can be outputted in the search result area 604.

The method of performing a search operation using two tag search words is explained in the embodiment explained with reference to FIG. 8. Yet, if an additional tag search word is inputted, it is apparent that the search operation can be performed using more tag search words.

### Second search mode - face position search mode

Meanwhile, one embodiment of the present invention proposes to search for an image based on a face position in the image. In particular, if a user designates a face area on the face area designation pad 602, the user can search for images whose faces exist in a position corresponding to the designated face area in the images.

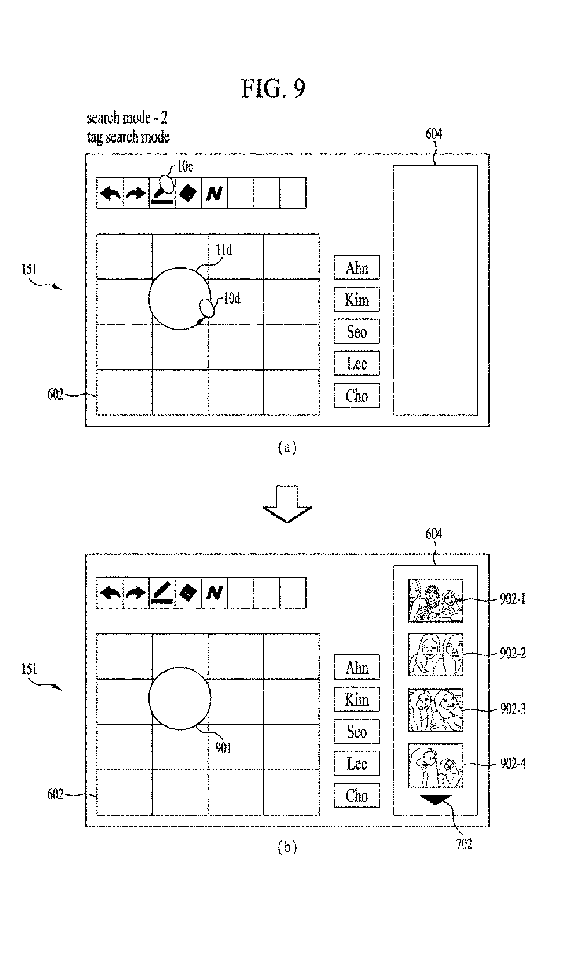

FIG. 9 is a diagram for a method of searching for an image in accordance with a second search mode according to one embodiment of the present invention.

Referring to FIG. 9 (a), the controller 180 receives inputs 10d and 11d for designating a face area from a user. If the inputs 10d and 11d for designating the face area are received, the controller 180 searches for images based on the designated face area and can output the searched result images in the search result area 604.

In this case, the inputs 10d and 11d for designating the face area may correspond to inputs forming a looped curve in a manner of touching 10d a specific point and dragging while the touch 10d is maintained.

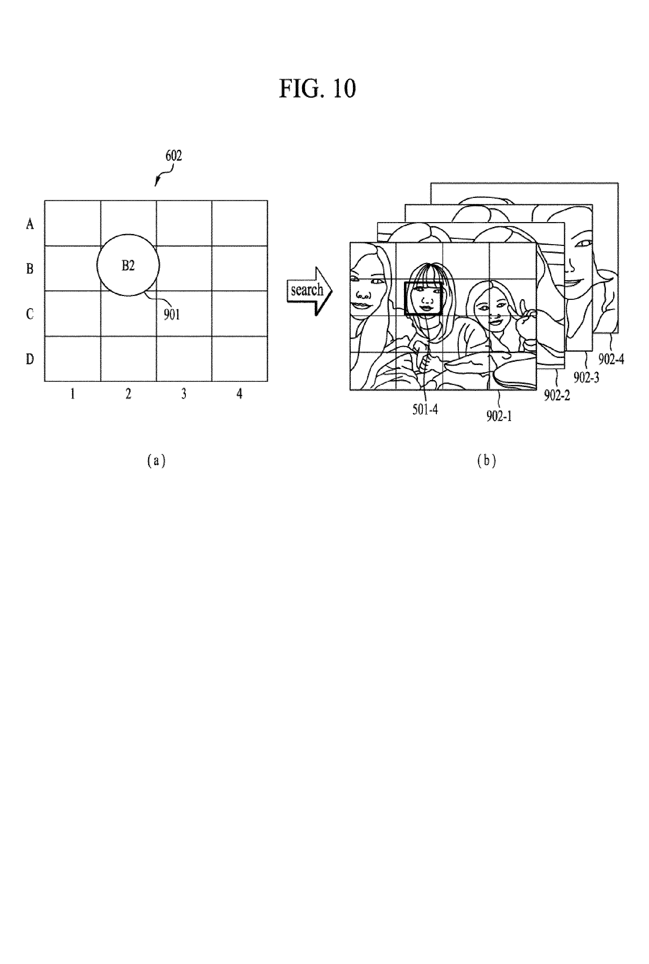

In FIG. 9 (b), the controller 180 displays a face area 901 designated by the inputs 10d and 11d designating the face area. The designated face area 901 may indicate a relative position in which a face exists among a whole area of the face area designation pad 602. Hence, if the face area is designated, the controller 180 can search for images in which faces exist in an area of the images corresponding to the designated face area 901 among a plurality of images to be searched. In particular, in other word, the controller 180 can search for images including faces, which exist at a position identical to the designated face area 901. Hence, an image can be searched according to a position in which a face is arranged in the image. The method of searching for an image based on a face position shall be described in detail with reference to FIG. 10 in the following.

FIG. 10 is a diagram for an example of a method of searching for an image based on a position of a face according to one embodiment of the present invention.

FIG. 10 (a) shows the face area designation pad 602. Similar to FIG. 9, assume that a face area 901 is designated in an identical position on the face area designation pad 602. In embodiment of FIG. 10, the face area designation pad 602 is divided by 4 in a horizontal orientation and divided by 4 in a vertical orientation. The face area designation pad is explained in a manner of being divided into 1 to 4 in the horizontal orientation and being divided into A to D in the vertical orientation. By doing so, the face area designation pad 602 depicted in FIG. 10 (a) can be divided into total 16 areas and the designated face area 901 can be positioned at a B2 area.

The controller 180 searches for images including a face in an area B2 corresponding to the designated face area 901. FIG. 10 (b) is a diagram for an example of search result. In particular, the controller 180 can identically divide the images into 16 areas. The controller searches for images including a face in the B2 area and can provide a search result.

FIG. 10 (b) shows an example of the image search result of FIG. 10 (a). The image search result includes search results of 902-1 to 902-4. Referring to the example of the search result images depicted in FIG. 10 (b), a face exists in the B2 area.

In particular, when a user intends to search for a preferred image, the user can search for the preferred image in a manner of recalling a position of a face existing in the preferred image and using the position of the face.

Meanwhile, according to the example mentioned earlier in FIG. 10, an image is searched in a manner of dividing the face area designation pad 602 into 16 areas, by which the present invention may be non-limited. It is apparent that the image search operation can be performed in a manner of dividing the face area designation pad into more areas (or less areas).

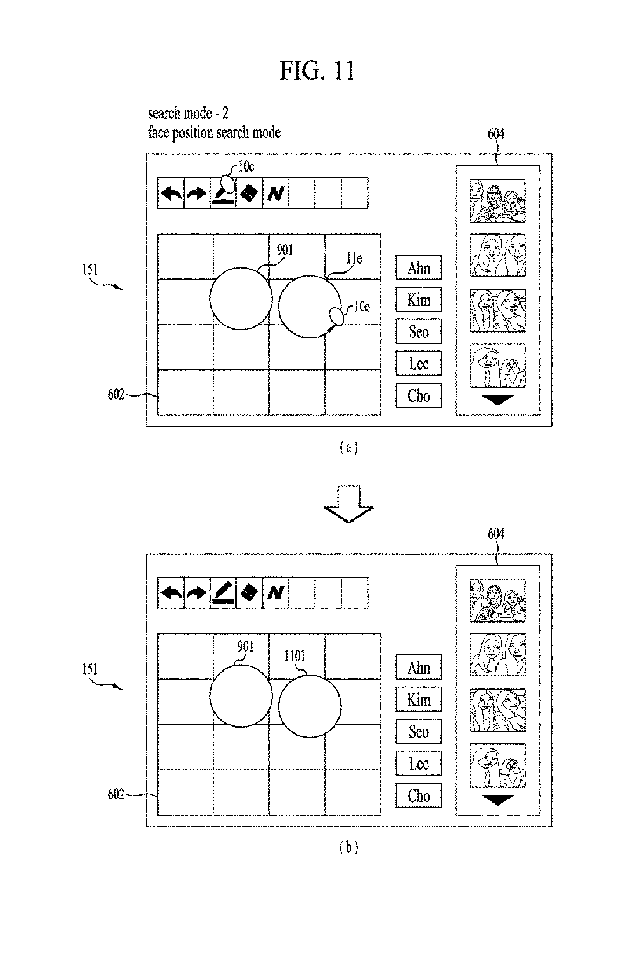

Meanwhile, although FIG. 9 and FIG. 10 shows examples of a single face area, an identical search operation can be performed based on a plurality of face areas. Regarding this, it shall be described with reference to FIG. 11 in the following.

FIG. 11 is a diagram for a method of searching for an image via a plurality of face areas in a second search mode according to one embodiment of the present invention.

Similar to FIG. 9, in FIG. 11 (a), assume that the controller 180 receives inputs 10e and 11e for designating face areas in a state that a face area 901 is designated. In explaining in associated with FIG. 11, the face area 901, which is already designated, is called a first face area and a newly designated face area 1101 is called a second face area.

FIG. 11 (b) shows that the first face area 901 and the second face area 1101 are outputted in the face area designation pad 602. The controller 180 can search for images based on the first face area 901 and the second face area 1101. In particular, the controller 180 can search for images including faces in areas, which correspond to the first face area 901 and the second face area 1101, respectively.

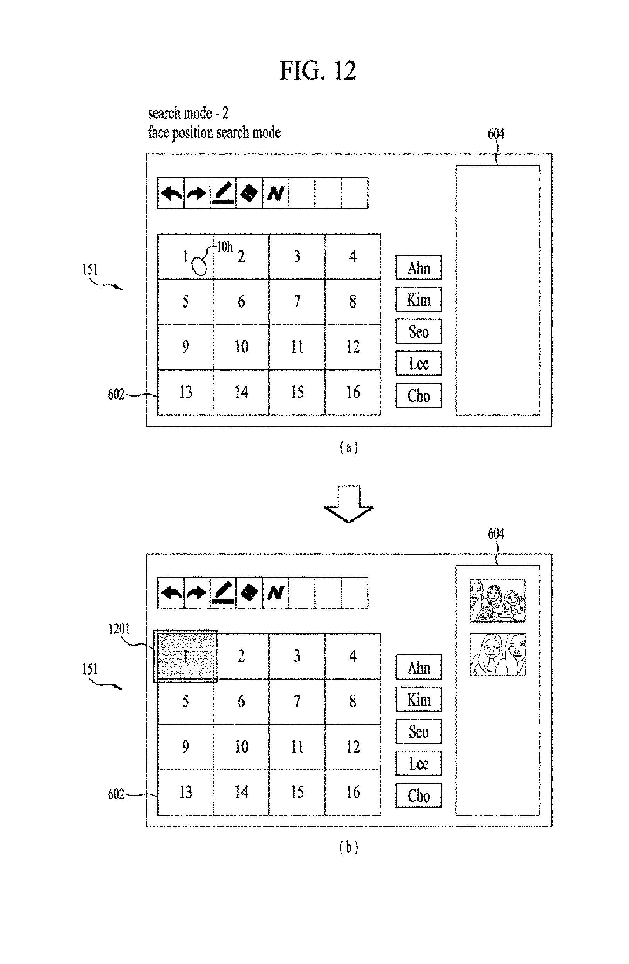

FIG. 12 is a diagram for a method of searching for an image in accordance with a second search mode according to one embodiment of the present invention. The image search method to be described in FIG. 12 is different from the method mentioned earlier in FIG. 9 in designating a face area.

Referring to FIG. 12 (a), the controller 180 outputs the face area designation pad 602 and the face area designation pad 602 is divided into 16 areas. For clarity, the 16 areas of the face area designation pad 602 are distinguished from each other in a manner of being displayed by number 1 to 16 ('area 1' to 'area 16').

If an input 10h for selecting a prescribed area from the face area designation pad 602, which is divided into a plurality of areas, is received, the controller 180 can designate the selected area as a face area (refer to FIG. 12 (b)). In this case, the input 10h for selecting the prescribed area may correspond to a press input inputted to an area intended to be selected.

FIG. 12 (b) shows a case that an 'area 1' has been selected. According to one embodiment of the present invention, if a specific area is selected, the controller 180 can distinctively display the selected area to distinguish the selected area from areas not selected. For instance, an indicator 1201 indicating the selected area can be outputted in the selected area.

As depicted in FIG. 12 (a), if an area is selected, the controller 180 can search for images including faces in an area corresponding to the selected area (designated face area). In particular, similar to the face area designation pad, in case of diving the images into 16 areas, the controller 180 can search for images including a recognized face in the 'area 1'.

The method of searching for an image by designating a face area is identical to what is mentioned with reference to FIG. 10.

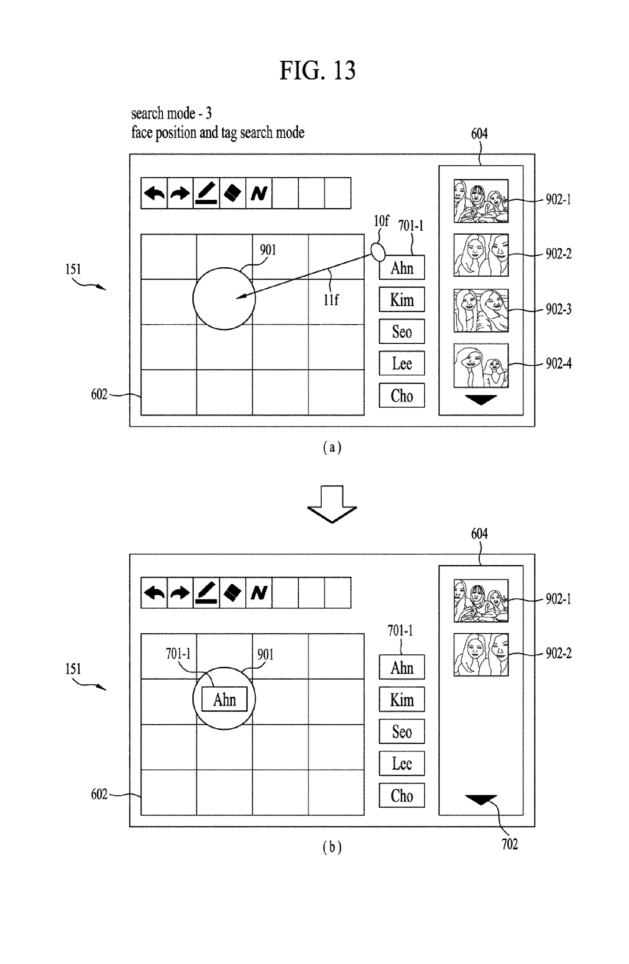

FIG. 13 is a diagram for a first example of a method of searching for an image in accordance with a third search mode according to one embodiment of the present invention. The third search mode corresponds to a search method in which the first search mode and the second search mode are combined with each other. The third search mode enables an image including a specific person in a specific position of the image to be searched.

In FIG. 13 (a), assume that a face area 901 is designated on the face area designation pad 602. Similar to FIG. 9 (b), the controller 180 can output a plurality of search results 902-1 to 902-4 in the search result area 604 based on the designated face area 901. In this case, if inputs 10f and 11f for matching a specific tag search word 701-1 with the face area 901 is received, the controller 180 can search for images including a face of a person corresponding to the specific tag search word 701-1 in an area of the images corresponding to the designated face area 901 among a plurality of images to be searched.

In this case, the inputs 10f and 11f for matching the specific tag search word 701-1 with the face area 901 may correspond to inputs for touching 10f the tag search word 701-1 and the inputs which are released after dragging it to a position of the face area 901 while the touching 10f is maintained.

Referring to FIG. 13 (b), the controller 180 can indicates that the specific search word 701-1 is matched with the face area 901 in a manner of outputting the specific tag search word 701-1, which is matched inside of the face area 901, on the face area designation pad 602.

And, the controller 180 can output result images in the search result area 604 according to the result of the searching. Referring to the search results depicted in FIG. 13 (b), it is able to check that a 901-1 and 901-2 image, which correspond to a result of excluding a part of images from the search results of FIG. 13 (a), are outputted only. The 902-1 and 902-2 image correspond to pictures including such a specific person as 'Eunhee Ahn' in an area of the images corresponding to the face area 901.

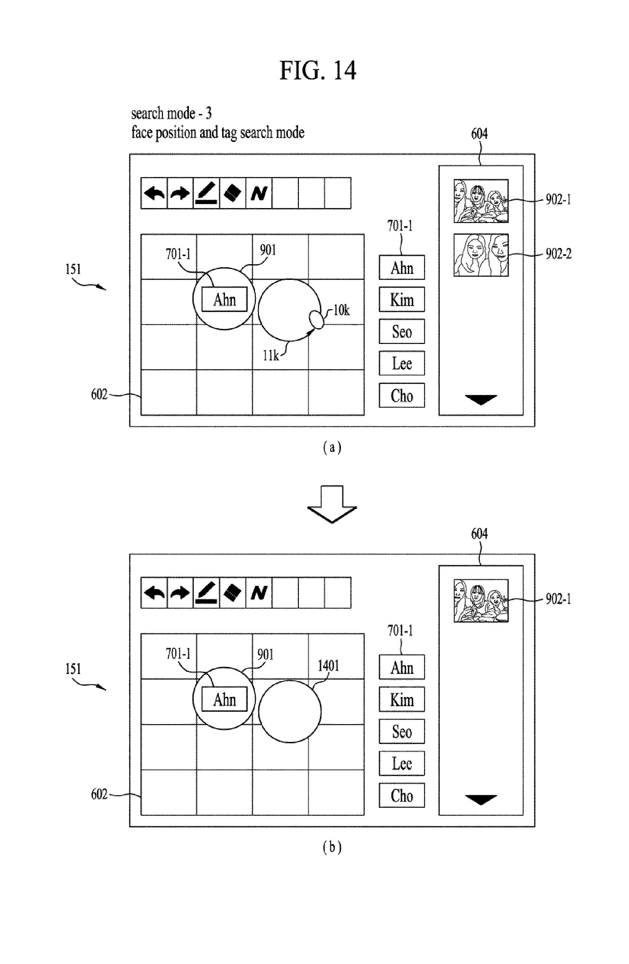

FIG. 14 is a diagram for a second example of a method of searching for an image in accordance with a third search mode according to one embodiment of the present invention. FIG. 14 shows a method of inputting an additional search condition to the search condition described in FIG. 13.

Assume that such a tag search word 701-1 as 'Eunhee Ahn' is matched with the face area 901 in FIG. 14 (a) similar to FIG. 13 (b). In explanation in associated with FIG. 14, the face area 901 is called a first face area and a face area to be additionally inputted is called a second face area.

In a state of FIG. 14 (a), if inputs 10k and 11k for additionally designating a face area is received, the controller 180 can search for images based on the first face area 901, the tag search word 701-1 and the second face area 1401. First of all, a method of searching for images based on the first face area 901 and the tag search word 701-1 may be identical to what is explained with reference to FIG. 13 (a) and (b). The controller 180 can further search for (filter) images including a face in an area corresponding to the second face area 1401 among the searched result images of FIG. 13.

By doing so, in case that a user remembers a face of a specific person in the first area and does not clearly remember a person in the second area, the user can search for an image including a face of a random person existing in the second area.

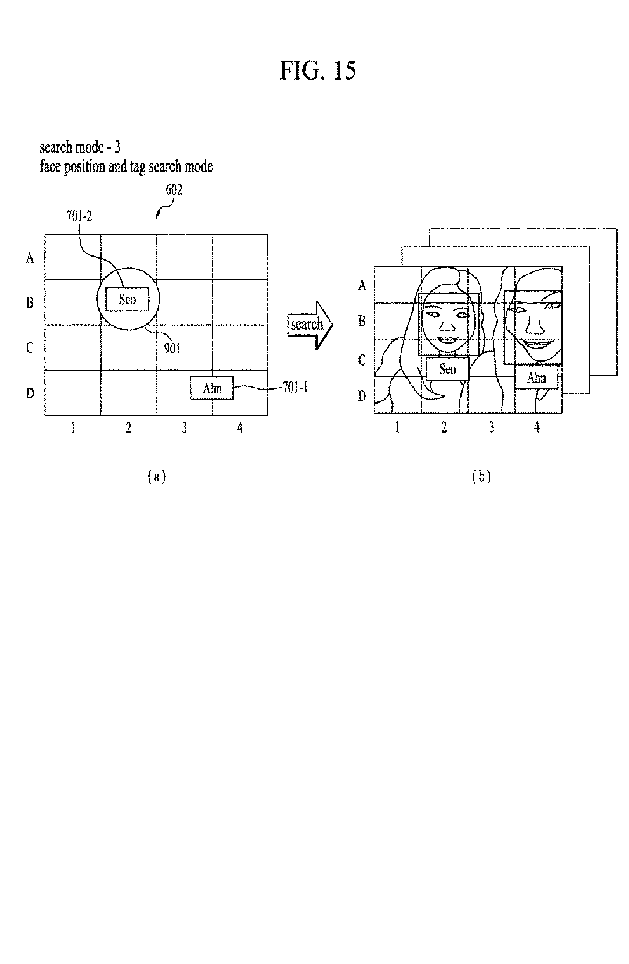

FIG. 15 is a diagram for a third example of a method of searching for an image in accordance with a third search mode according to one embodiment of the present invention.

In FIG. 15, similar to FIG. 10, the face area designation pad 602 is divided by 4 in a horizontal orientation and divided by 4 in a vertical orientation. The face area designation pad is explained in a manner of being divided into 1 to 4 in the horizontal orientation and being divided into A to D in the vertical orientation. Similarly, it is apparent that a search can be performed in a manner of diving the face area designation pad into more areas in FIG. 15.

In FIG. 15 (a), a face area 901 exists in a B2 area and such a tag search word 701-2 as 'Young jung Seo' is matched with the first face area 901. The controller 180 can configure whether a face of such a person as 'Young jung Seo' is positioned at the B2 area among images to be searched as a first search condition.

In FIG. 15 (a), assume that such a tag search word as 'Eunhee Ahn' 701-1 is selected as an additional search condition. The controller 180 can output the selected tag search word such as 'Eunhee Ahn' in the face area designation pad 602. Then, the controller 180 can configure whether a face of such a person as 'Eunhee Ahn' is included (position of the face in the image is irrelevant) in the images to be searched as a second search condition.

The controller 180 performs an image search operation based on the aforementioned first search condition and the second search condition and can control a searched result to be outputted (refer to FIG. 15 (b)).

In particular, according to embodiment explained in FIG. 15, an image simultaneously including a face of such a specific person as 'Young jung Seo' existing in a position of the image corresponding to the face area 901 and a face of such a person as 'Eunhee Ahn' can be searched. Referring to an example of an image depicted in FIG. 15 (b), the face of the person such as 'Young jung Seo' is positioned at the B2 area in the image and it is able to check that the face of the person such as 'Eunhee Ahn' is included in the image as well. And, the face of the person such as 'Eunhee Ahn' is irrelevant to a position.

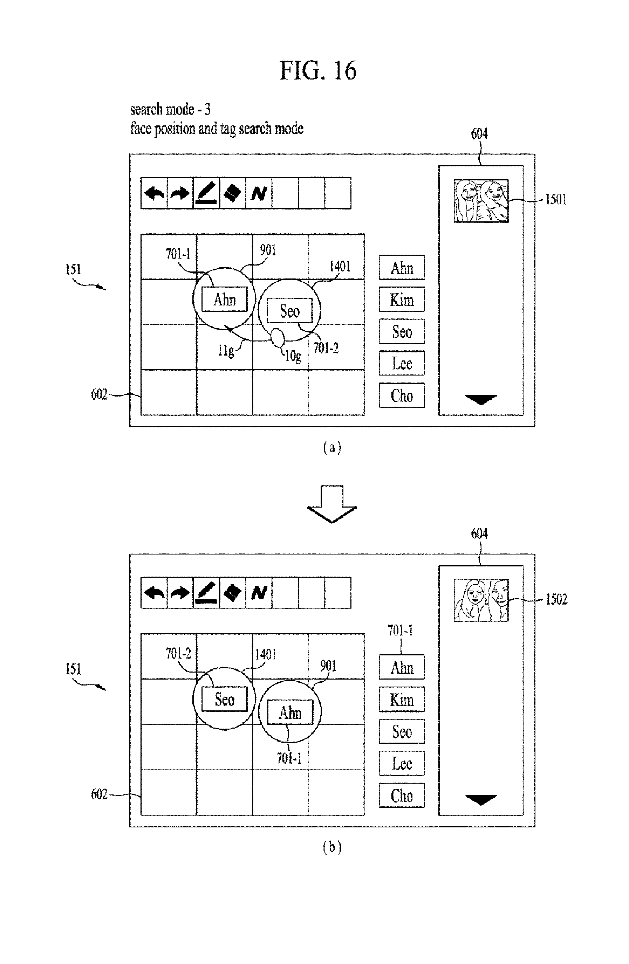

FIG. 16 is a diagram for an example of a method of changing a position between designated face areas according to one embodiment of the present invention.

Referring to FIG. 16 (a), such a tag search word 701-1 as 'Eunhee Ahn' is matched with a first face area 901 and such a tag search word 701-2 as 'Young jung Seo' is matched with a second face area 1401. In this case, if inputs 10g and 11g for changing a position between the first face area 901 and the second face area 1401 are received, as depicted in FIG. 16 (b), the controller 180 can replace the position of the first face area 901 with the position of the second face area 1401. Then, the controller 180 can perform an image search operation based on the changed positions of the first face area and the second face area.

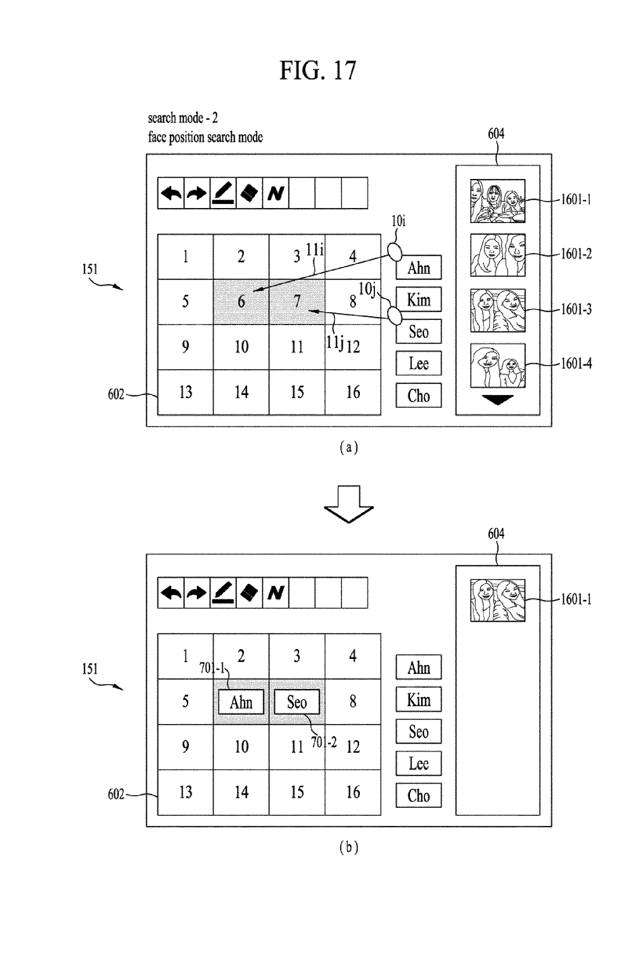

FIG. 17 to FIG. 19 are diagrams for a fourth example of a method of searching for an image in accordance with a third search mode according to one embodiment of the present invention.

FIG. 17 (a) shows a case that an 'area 6' and an 'area 7' are selected. Selecting an area and searching based on a selected area are identical to the second search mode which is mentioned earlier with reference to FIG. 12. Hence, the controller 180 searches for images including a face in areas corresponding to the selected areas (area 6 and area 7) among images to be searched and may be then able to output a search result in the search result area 604 as depicted in FIG. 17 (a). Images 1601-1 to 1601-4 are outputted in the search result area 604 shown in FIG. 17 (a) as the search result.

In this situation, if inputs 10i, 11i, 10j and 11j for respectively matching such a tag search word 701-1 as 'Eunhee Ahn' and such a tag search word 701-2 as 'Young jung Seo' with the 'area 6' and the 'area 7' are received, the controller 180 can display the tag search word 701-1 such as 'Eunhee Ahn' in the 'area 6' and can display the tag search word 701-2 such as 'Young jung Seo' in the 'area 7'. And, the controller 180 can search for images including a face of such a person as 'Eunhee Ahn' in the 'area 6' and images including a face of such a person as 'Young jung Seo' in the 'area 7'. And, as depicted in FIG. 17 (b), the controller can display a search result in the search result area 604. As depicted in FIG. 17 (b), an image 1601-1 is outputted in the search result area 604 as the search result.

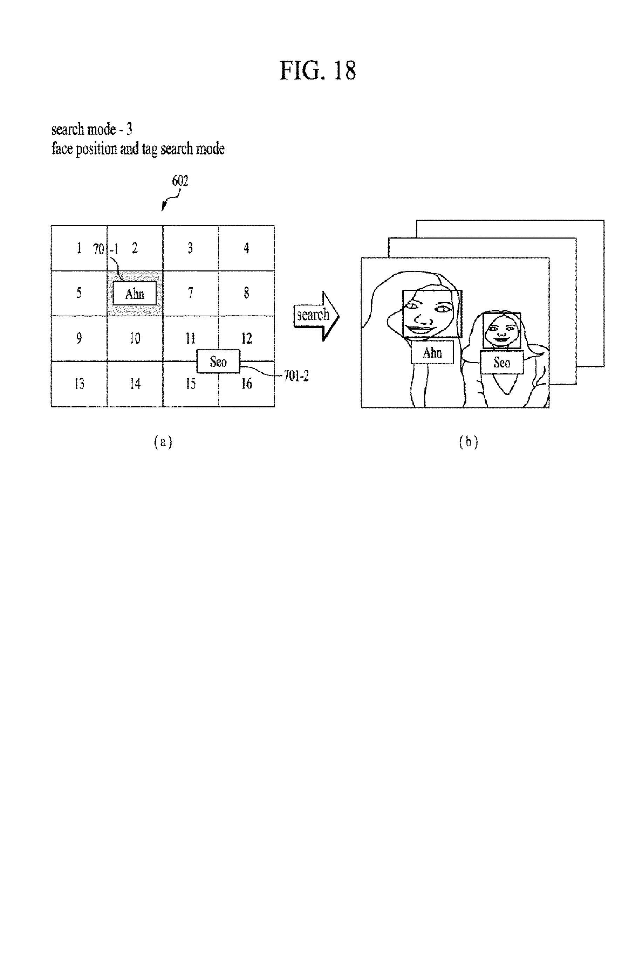

Assume that the 'area 6' is selected in FIG. 18 (a) and the tag search word 701-1 such as 'Eunhee Ahn' is matched with the selected 'area 6'. In addition, assume that the tag search word 701-2 such as 'Young jung Seo' is selected as a search condition.

In this case, since the tag search word 701-1 such as 'Eunhee Ahn' is matched with the 'area 6', whether there exists a face of such a person as 'Eunhee Ahn' in the 'area 6' corresponds to a search condition in searching for images (first search condition in the explanation on FIG. 18).

Since the tag search word 701-2 such as 'Young jung Seo' is not matched with any area, whether there exists a face of such a person as 'Young jung Seo' corresponds to a search condition irrespective of an area (position) on an image (second search condition in the explanation on FIG. 18).

By doing so, the controller 180 can search for images satisfying both the first search condition and the second search condition (refer to FIG. 18 (b)).

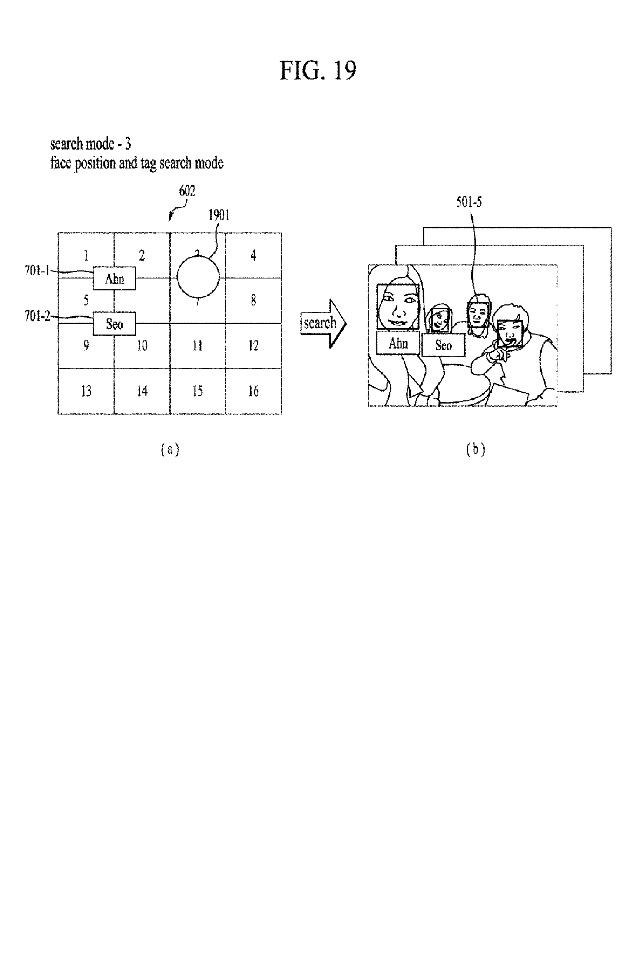

Assume that a face area 1901 is designated and the tag search word 701-1 such as 'Eunhee Ahn' and the tag search word 701-2 such as 'Young jung Seo' are selected as a search condition irrespective of the designated face area in FIG. 19 (a).

In this case, a first search condition may correspond to whether a face exists in an 'area 3' and an area 7' (not necessarily be a specific person). And, a second search condition may correspond to whether there exist a face of such a person as 'Eunhee Ahn' and a face of such a person as 'Young jung Seo' irrespective of a position. The controller 180 can search for images based on the first and the second search condition.

FIG. 19 (b) shows an example of an image according to the aforementioned search result. The image shown in the example includes the face of the person such as 'Eunhee Ahn' and the face of the person such as 'Young jung Seo' (irrespective of a position) and includes faces recognized in the 'area 3' and the 'area 7' on the image area (refer to 501-5).

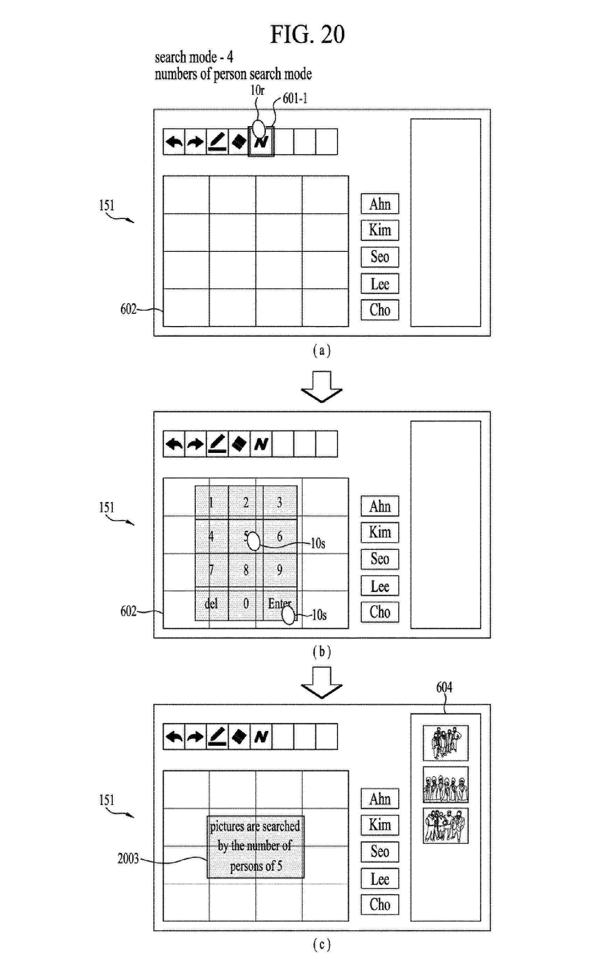

FIG. 20 is a diagram for a first example of a method of searching for an image in accordance with a fourth search mode according to one embodiment of the present invention.

The fourth search mode corresponds to a method of searching for images based on the number of persons included in the images. More specifically, the fourth search mode corresponds to the method of searching for images based on the number of faces recognized in the images.

FIG. 20 (a) shows a state according to one embodiment of the present invention and the number of persons input icon 601-1 is outputted in the drawing tool area 601. If an input 10r for selecting the number of persons input icon 601-1 is received, the controller 180 can output a pop-up window 2001 for inputting the number of persons. If the number of persons is inputted 10s via the pop-up window 2001, the controller 180 can perform an image search based on the inputted number of persons. And, the controller 180 can display 2002 the inputted number of persons and can also output a guide pop-up window 2003 guiding that the image search is performed based on the corresponding number of persons. Then, the controller 180 can output searched result images in the search result area 604.

FIG. 21 is a diagram for a second example of a method of searching for an image in accordance with a fourth search mode according to one embodiment of the present invention.

Similar to the first example of FIG. 20, the image search is performed based on the number of persons in the second example. Yet, the image search in the second example can be performed based on images including a specific person among persons included in the number of persons.

Referring to FIG. 21, such a tag search word 701-1 as 'Eunhee Ahn' is selected as a search condition. In this case, if an input for selecting the number of persons input icon 601-1 is received, the controller 180 can output a pop-up window 2001 for inputting the number of persons. If the number of persons is inputted 10s via the pop-up window 2001, the controller 180 can perform an image search based on the inputted number of persons together with the selected tag search word.

In particular, the controller 180 includes such a person as 'Eunhee Ahn' among the images to be searched and can search for the images including persons as many as the inputted number of persons.

And, the controller 180 can display 2002 the inputted number of persons and can also output a guide pop-up window 2003 guiding that the image search is performed based on the corresponding number of persons. Then, the controller 180 can output searched result images in the search result area 604.

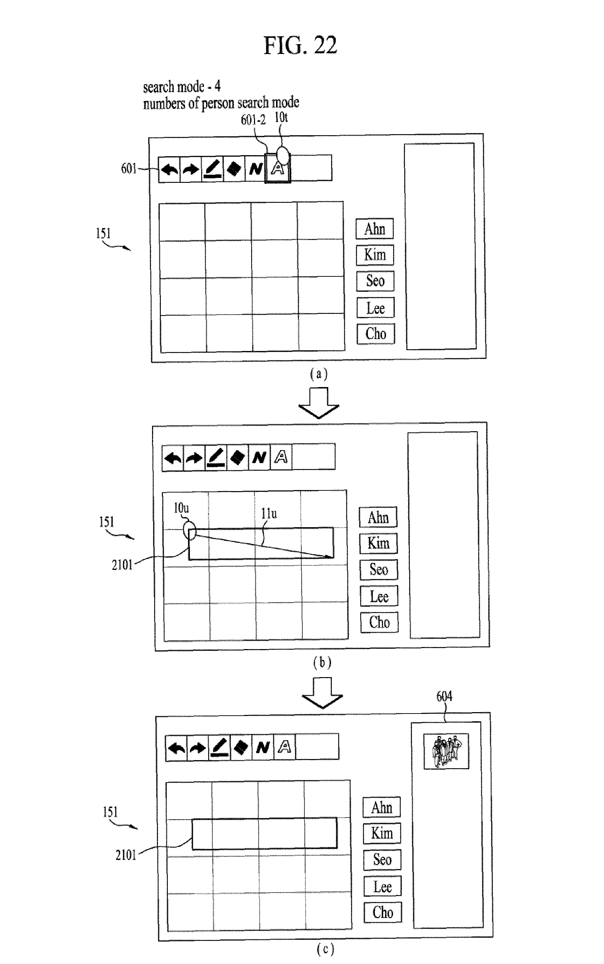

Meanwhile, in case of a group picture, although it is not able to precisely know how many persons are included in the group picture, there may exist a case that faces of several persons are captured in a manner of being cornered in a specific position. Hence, one embodiment of the present invention intends to propose a method of searching for such an image as the group picture mentioned above. Regarding this, it shall be described with reference to FIG. 22 in the following.

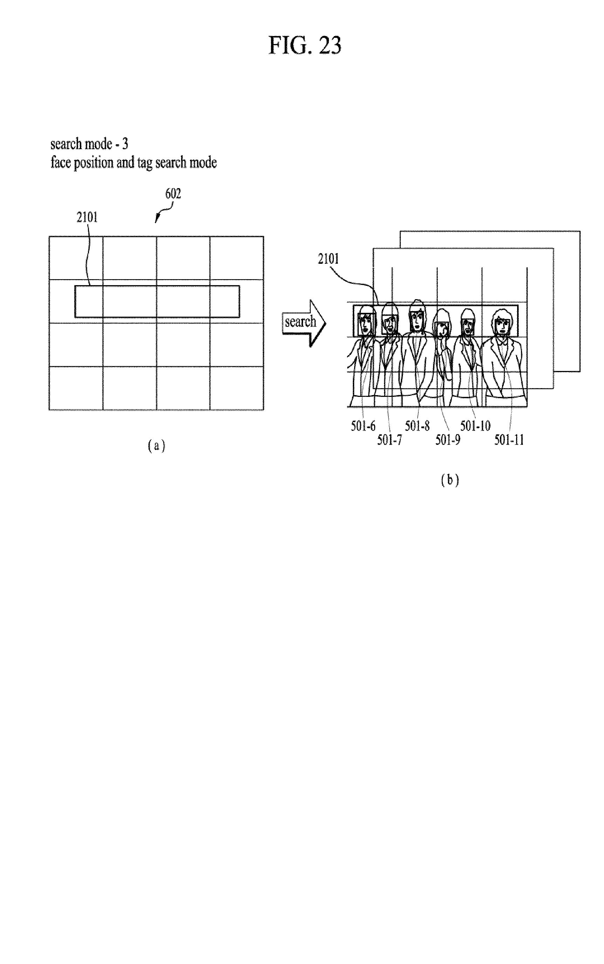

FIG. 22 and FIG. 23 are diagrams for a method of searching for a group picture according to one embodiment of the present invention.

FIG. 22 (a) shows a state according to one embodiment of the present invention and a group picture area icon 601-2 is outputted in the drawing tool area 601.

After the group picture area icon 601-2 is selected 10t, if an input 10u for designating an area is received, the controller 180 can perform an image search based on a designated area 2101.

FIG. 23 (a) shows the designated area 2101 together with the face area designation pad 602 and FIG. 23 (b) shows search result images of FIG. 23 (a). In performing a search, the controller 180 can search for an image including a plurality of recognized faces in the designated area 2101. Referring to FIG. 23 (b), the faces 501-6 to 501-11 of a plurality of persons are included in the designated area 2101. In addition, the controller 180 can exclude images including a face recognized at the outside of the designated area 2101 from the search result. In particular, the controller 180 can control the image including the faces recognized in the designated area 2101 to be searched only.

Then, the controller 180 can output the searched result in the search result area 604.

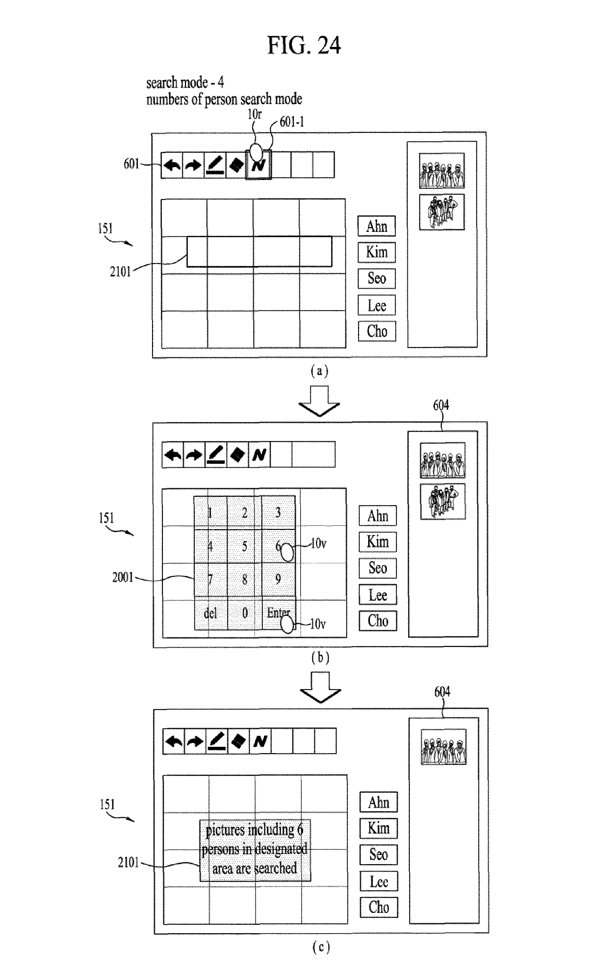

Meanwhile, according to the embodiment explained with reference to FIG. 22, a search operation is performed irrespective of the number of recognized faces included in the designated area. Yet, according to a different embodiment of the present invention, the search operation can be performed in a manner of designating the number of recognized faces included in the designated area. Regarding this embodiment, it shall be described with reference to FIG. 24 in the following.

FIG. 24 is a diagram for a method of designating an area and a method of performing an image search by designating the number of persons in the designated area according to one embodiment of the present invention.

FIG. 24 (a) shows a search state according to one embodiment of the present invention. Similar to FIG. 22, assume that there exists a designated area 2101. In this case, if an input for selecting the number of persons input icon 601-1 is received 10r, the controller 180 can output a pop-up window 2001 for inputting the number of persons. If the number of persons is inputted 10v via the pop-up window 2001, the controller 180 can perform an image search based on the designated area 2101 and the inputted number of persons. In particular, the controller 180 can search for images including the inputted number of persons in the designated area 2101 among images to be searched.

And, the controller 180 can output a guide pop-up window 2101 guiding that the image search is performed based on the designated number of persons. Then, the controller 180 can control search result images to be outputted in the search result area 604.

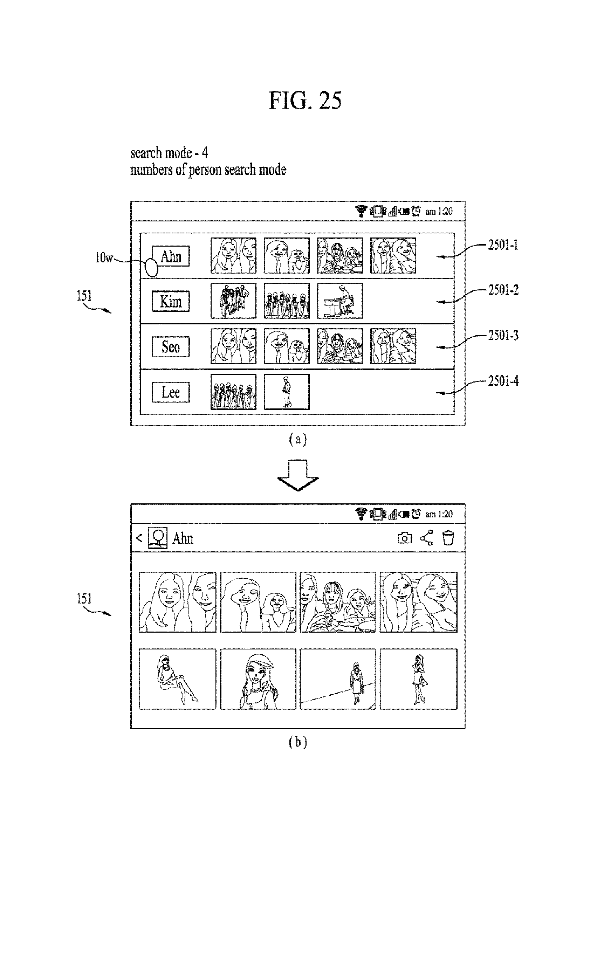

The embodiments of the present invention, which have been explained so far, correspond to methods of searching for images in a manner of identifying a specific person via face recognition. Moreover, according to a different embodiment, images can be categorized by a specific person via face recognition. Regarding this, it shall be described with reference to FIG. 25 in the following.

FIG. 25 is a diagram for a method of searching for an image in accordance with a fifth search mode according to one embodiment of the present invention.

Referring to FIG. 25 (a), the controller 180 outputs images in a manner of categorizing the images according to a person. For instance, images including such a person as 'Eunhee Ahn' are outputted in 2501-1 area only. In particular, the controller 180 searches for pictures including the person such as 'Eunhee Ahn' via face recognition and can control searched result to be outputted in the 2501-1 area. The aforementioned method can be identically applied to the rest of areas 2501-2 to 2501-4.

A list of persons outputted in FIG. 25 (a) can be configured in an order of a most recently used tag search word, a most frequently included person in images, a most frequently used tag search word or the like. And, a list including more persons can be displayed via a scroll operation.

If an input 10w for selecting a specific person is received, the controller 180 can display images including the specific person only as depicted in FIG. 25 (b).

So far, various methods for performing an image search have been introduced. According to the aforementioned methods, a result of the image search may have an output of a single image, no image depending on a search condition, or a plurality of images.

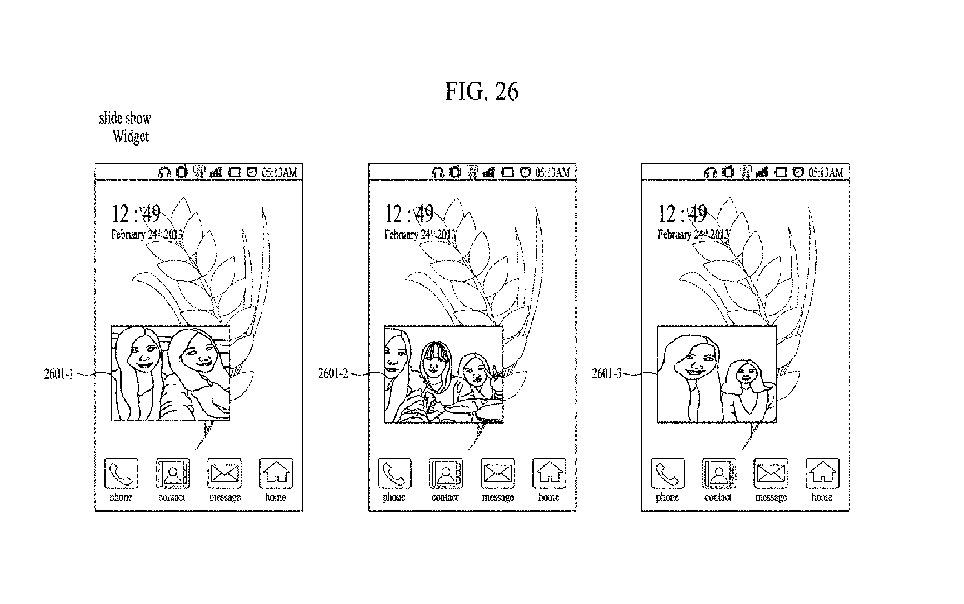

In the following description, if a plurality of images are outputted as a result of the image search, a method of utilizing the search result is explained with reference to FIG. 26 in the following embodiment.

FIG. 26 is a diagram for a method of utilizing a search result according to one embodiment of the present invention.

Referring to FIG. 26(a) to (c), a home screen is outputted via the touch screen 151 of the mobile terminal 100. The home screen is explained in more detail.

In general, the home screen can be defined as a screen firstly displayed in the touch screen 151 when a lock of the touch screen is cancelled. At least one icon to execute an application or an internal function or a widget can be displayed in the home screen. Two or more home screens may exist in the mobile terminal. In this case, the two or more home screens can be sequentially displayed one by one when a prescribed touch gesture is put on the touch screen 151. Each of the home screens may have icons (widgets) different from each other.

If a plurality of images are searched by the aforementioned methods, one embodiment of the present invention proposes to sequentially output a plurality of the searched images via picture slide widgets 2601-1 to 2601-3 on the home screen.

Referring to FIG. 26(a) to (c), the controller 180 outputs picture slide widgets 2601-1 to 2601-3. The picture slide widgets 2601-1 to 2601-3 display an image slide with a prescribed interval. The image slide may correspond to search result images according to one embodiment of the present invention.

Meanwhile, a search method according to one embodiment of the present invention can be efficiently used in case of performing an operation of combining several pictures with each other.

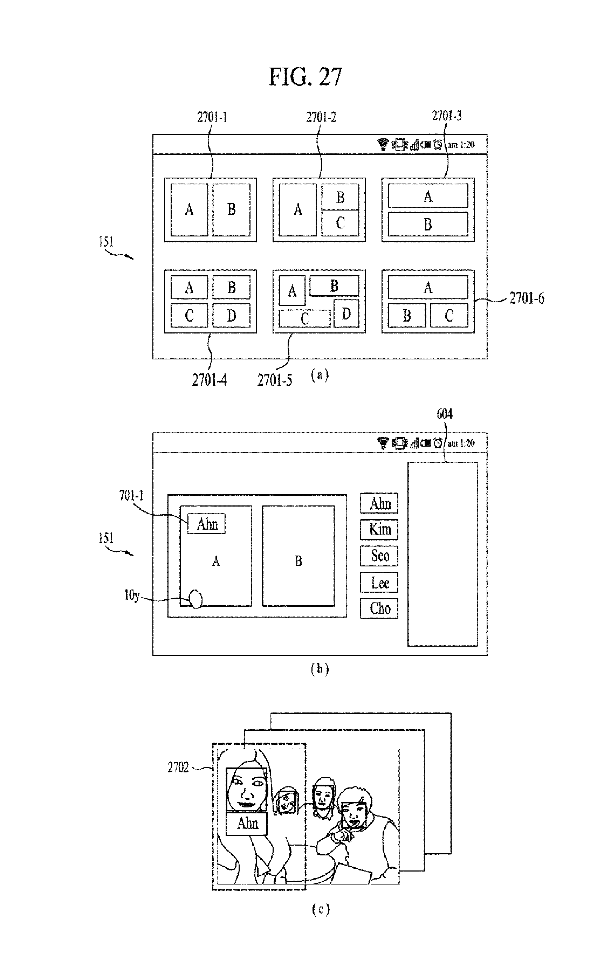

FIG. 27 is a diagram for a method of utilizing a search method according to one embodiment of the present invention.

Referring to FIG. 27 (a), the controller 180 outputs a plurality of image composition frames 2701-1 to 2701-6 via the touch screen 151.

The image composition frame indicates a frame used for composing a plurality images into one image. One image is selected and the image can be inserted into each of a plurality of areas (A to D area in FIG. 27) included in the image composition frame.

If an input for selecting one of a plurality of the image composition frames 2701-1 to 2701-6 is received, as depicted in FIG. 27 (b), the controller 180 can output a tag search word list 603 and a search result area 604 together with the selected image composition frame 2701-1.

If a specific tag search word is inputted in a specific area of the image composition frame, the controller 180 can perform a search operation based on the inputted tag search word to search for an image to be inserted to the specific area. Referring to an example shown in FIG. 27 (b), when the image search operation is performed to insert an image into an 'area A' of the selected image composition frame 2701-1, if such a tag search word 701-1 as 'Eunhee Ahn' is inputted in the 'area A', the controller 180 can output image search result including such a person as 'Eunhee Ahn'.

Moreover, one embodiment of the present invention proposes to perform an image search in a manner of further considering a position of a specific area in an image composition frame. Referring to the example of FIG. 27 (b), since the 'area A' corresponds to an area leaning to the left on the basis of the whole of the image composition frame, pictures including such a person as 'Eunhee Ahn' in a left area of the pictures may be suitable for an image to be inserted into the 'area A'. Hence, in case of searching for the image to be inserted into the 'area A', the controller 180 searches for the pictures including the person such as 'Eunhee Ahn' in the left area (2702 in FIG. 27 (c)) of the pictures and can control the searched result to be outputted in the search result area 604.

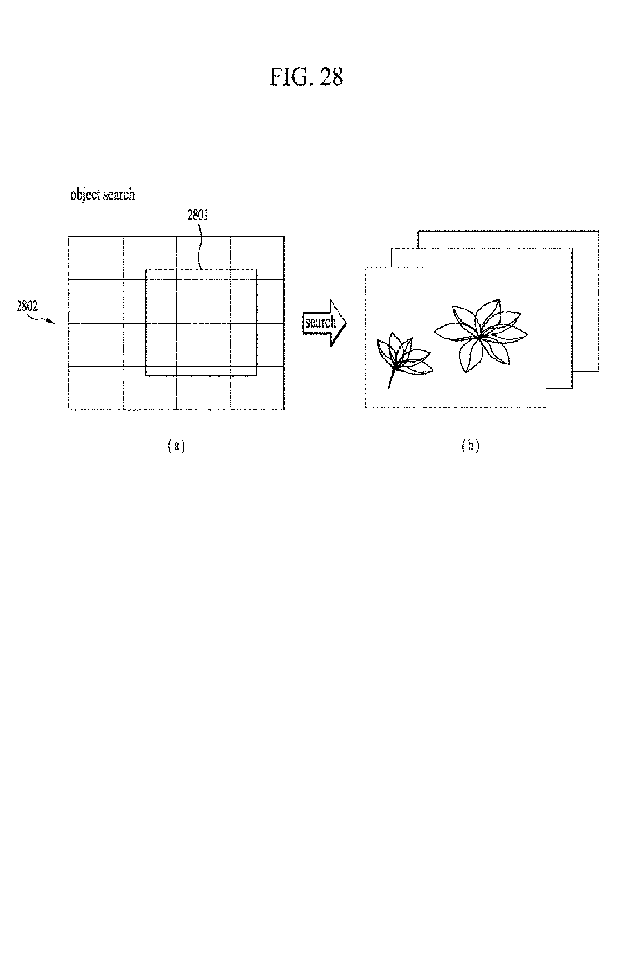

Meanwhile, embodiments of the present invention can be applied to not only face recognition of a person but also recognition of an object. A method of searching for images via object recognition is proposed in FIG. 28.

FIG. 28 is a diagram for a method of searching for an image via object recognition according to one embodiment of the present invention.

FIG. 28 (a) shows an object area designation pad 2802 according to one embodiment of the present invention. The object area designation pad 2802 is an area corresponding to the aforementioned face area designation pad 602. The object area designation pad indicates a pad used for receiving an input corresponding to an area at which a specific object is positioned from a user.

If an input for designating a prescribed area 2801 is received from the user, the controller 180 can search for images including a specific object in the prescribed area 2801. Referring to an example of FIG. 28, the controller searches for images including flowers in the prescribed area 2801.

According to embodiments of the present invention, a face of a specific person can be matched with contact informations via face recognition and identification. In addition, in case of sharing an image using the matched contact informations, a different embodiment of the present invention proposes a method of directly transmitting the image to the specific person.

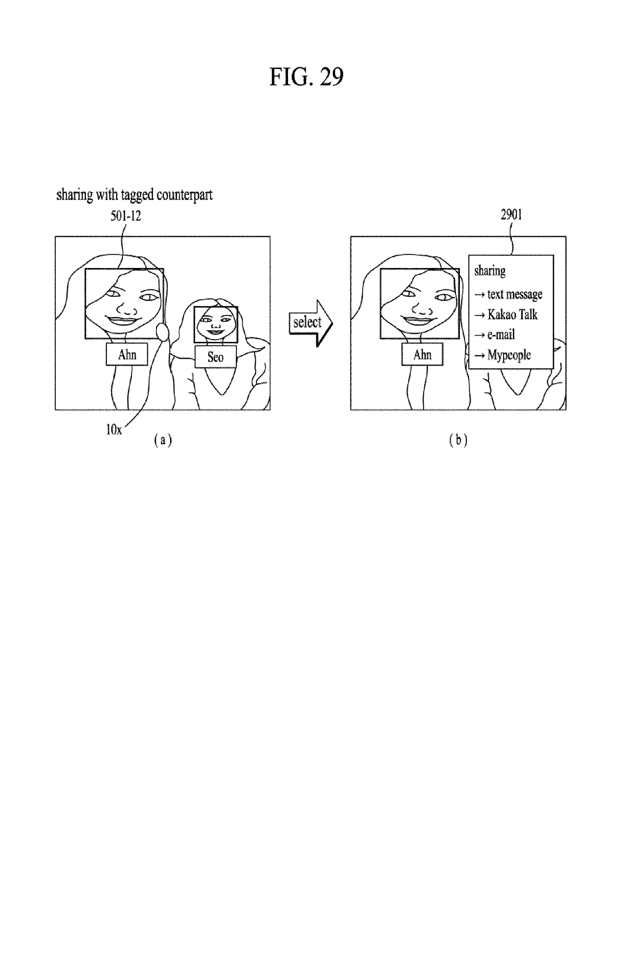

FIG. 29 is a diagram for a method of easily sharing an image based on face recognition according to one embodiment of the present invention.

Referring to an image shown in FIG. 29 (a), a face of such a person as 'Eunhee Ahn' and a face of such a person as 'Young jung Seo' are recognized. if an input 10x for selecting the person such as 'Eunhee Ahn' is received, the controller 180 can output a sharing selection pop-up window 2901. The sharing selection pop-up window 2901 indicates a pop-up window used for selecting one sharing means from a list of at least one sharing means. Referring to FIG. 29 (b), 'text message', 'Kakao Talk', 'e-mail' and 'Mypeople' are outputted in the sharing selection pop-up window 2901 as the sharing means. If one means is selected from the sharing selection pop-up window 2901, the controller 180 performs sharing using the selected sharing means and can directly transmit the image to the person such as 'Eunhee Ahn' using information stored in the contact of the person such as 'Eunhee Ahn'.

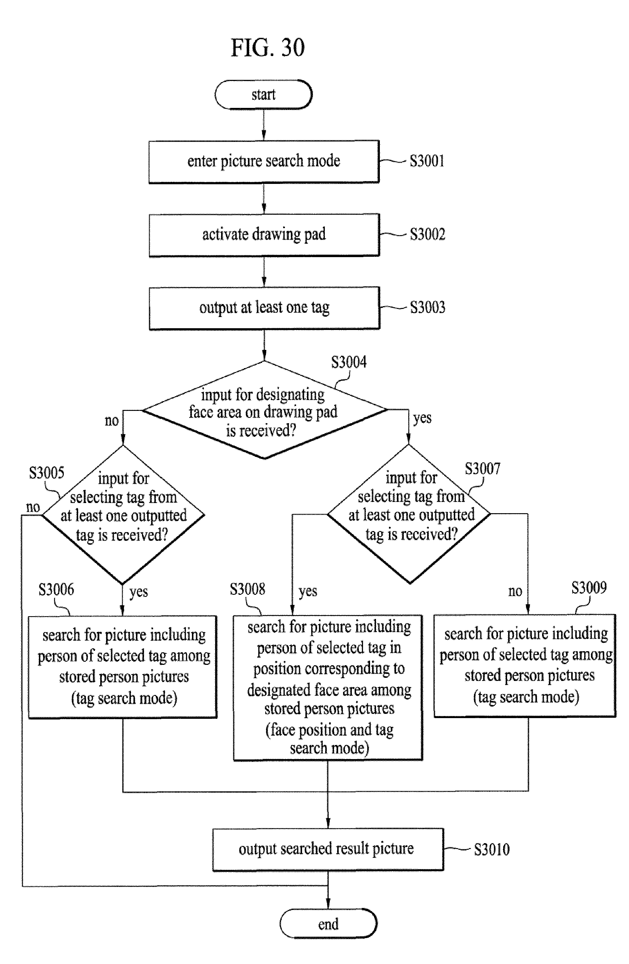

FIG. 30 is a flowchart for a method of searching for an image based on face recognition according to one embodiment of the present invention.

In the step S3001, the controller 180 may enter a picture search mode. In case of entering the picture search mode, as depicted in FIG. 6, the controller 180 can output (activate) the face area designation pad 602 (drawing pad) [S3002].

In the step S3003, the controller 180 can output the tag search word list 603 including at least one tag search word.

In the step S3004, the controller 180 determines whether an input for designating a face area is received on the face area designation pad 602. If there is a designation of the face area, the controller can proceed with the step S3007. Otherwise, the controller can proceed with the step S3005.

In the step S3005, the controller 180 determines whether an input for selecting at least one tag search word from the tag search word list 603 is received. If the input for selecting the tag search word is not received, the controller 180 may end the flowchart. If the input for selecting the tag search word is received, the controller 180 can proceed with the step S3006.

In the step S3006, the controller 180 can perform a search operation based on the selected tag search word. In the step S3006, a search mode performed by the controller 180 may correspond to the aforementioned tag search mode. In particular, the controller 180 can search for an image including a corresponding person irrespective of a face position of the person (a person corresponding to the selected tag search word) included in the image. And, the controller 180 proceeds with the step S3001, outputs a searched result picture and may be then able to end the flowchart.

In the step S3007, the controller 180 determines whether an input for selecting at least one tag search word from the tag search word list 603 is received. If the input for selecting the tag search word is not received, the controller 180 can proceed with the S3009. If the input for selecting the tag search word is received, the controller 180 can proceed with the S3008.

In the step S3008, the controller 180 can perform a search operation based on a designated face area and the selected tag search word. The search operation in the step S3008 may correspond to the aforementioned face position and the tag search mode. In particular, the controller 180 can search for an image including a specific person (a person corresponding to the selected tag search word) in the designated face area. And, the controller 180 proceeds with the step S3001, outputs a searched result picture and may be then able to end the flowchart.

In the step S3009, the controller 180 can perform a search operation based on the designated face area. The search operation in the step S3009 may correspond to the aforementioned face position search mode. In particular, the controller 180 can search for an image including a face of a random person in the designated face area. And, the controller 180 proceeds with the step S3001, outputs a searched result picture and may be then able to end the flowchart.

Advantages and effectiveness of a mobile terminal according to the present invention and a method of controlling therefor are explained in the following.

According to at least one of embodiments of the present invention, it is able to provide a user with a user interface enabling the user to easily and conveniently search for an image data preferred by the user among many numbers of stored image data.

It will be apparent to those skilled in the art that the present invention can be specified into other form(s) without departing from the spirit or scope of the inventions.

The above-described methods can be implemented in a program recorded medium as computer-readable codes. The computer-readable media include all kinds of recording devices in which data readable by a computer system are stored. The computer-readable media include ROM, RAM, CD-ROM, magnetic tapes, floppy discs, optical data storage devices, and the like for example and also include carrier-wave type implementations (e.g., transmission via Internet). And, the computer can include the control unit 180 of the terminal.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A mobile terminal (100), comprising:
a touchscreen (151);
a memory (160) configured to store a plurality of images; and
a controller (180) configured to:
cause the touchscreen (151) to display a face position designation area;
receive a first input via the face position designation area, the first input indicating a specific region of the face position designation area; and
cause the touchscreen (151) to display a first image of the plurality of images, the first image including a face that is at a location of the image that generally corresponds to the specific region.

2. The mobile terminal (100) of claim 1, wherein:
the memory (160) is further configured to store contact information associated with each of a plurality of contacts; and
the controller (180) is further configured to:
receive a second input indicating a searched contact of the plurality of contacts; and
cause the touchscreen (151) to display a second image of the plurality of images, the second image including a recognized face corresponding to the searched contact.

3. The mobile terminal (100) of claim 2, wherein the controller (180) is further configured to identify the first image to be displayed such that the face included in the first image corresponds to the searched contact when the searched contact is linked with the specific region.

4. The mobile terminal (100) of claim 3, wherein:
the controller (180) is further configured to cause the touchscreen (151) to display a list comprising one or more of the plurality of contacts; and
the second input comprises a selection of the searched contact from the displayed list.

5. The mobile terminal (100) of claim 4, wherein the searched contact is linked with the specific region in response to a linking input comprising a touch and drag of the searched contact to the specific region.

6. The mobile terminal (100) of claims 4 or 5, wherein the displayed list is arranged in an order based on:
a frequency each contact is contacted,
a setting by a user, or
a most recent contact time of each contact.

7. The mobile terminal (100) of any one of claims 2 to 6, wherein the controller (180) is further configured to identify the first image to be displayed such that the first image includes a face that is at a location of the first image that generally corresponds to the specific region and the recognized face at any position within the first image when the searched contact is not linked with the specific region.

8. The mobile terminal (100) of any one of proceeding claims, wherein the first input comprises an input drawing a closed shape while the input is maintained, the closed shape defining the specific region at an inner portion of the closed shape.

9. The mobile terminal (100) of any one of proceeding claims, wherein:
the face position designation area is divided into a plurality of sub-areas; and
the first input comprises a selection of one or more of the plurality of sub-areas.

10. The mobile terminal (100) of claim 1, wherein the controller (180) is further configured to:
receive a third input indicating a number corresponding to a searched person count; and
identify the first image to be displayed such that the first image includes at least a number of faces at a location of the first image that generally corresponds to the specific region, wherein the number of faces corresponds to the searched person count.

11. A method of controlling a mobile terminal, the method comprising:
storing a plurality of images;
displaying a face position designation area on a touchscreen of the mobile terminal;
receiving (S3004) a first input via the face position designation area, the first input indicating a specific region of the face position designation area; and
displaying (S3010) a first image of the plurality of images, the first image including a face that is at a location of the first image that generally corresponds to the specific region.

12. The method of claim 11, further comprising:
storing contact information associated with each of a plurality of contacts; and
linking the specific region with a searched contact of the plurality of contacts;
wherein the face included in the first image at the location generally corresponding to the specific region corresponds to the searched contact.

13. The method of claim 12, further comprising:
displaying a list comprising one or more of the plurality of contacts, wherein the first input comprises a selection of the searched contact from the displayed list, and
linking the specific region with the searched contact in response to a linking input comprising a touch and drag of the searched contact to the specific region.

14. A method of controlling a mobile terminal, the method comprising:
storing a plurality of images;
storing contact information associated with each of a plurality of contacts;
receiving (S3007) a first input indicating a searched contact of the plurality of contacts; and
displaying (S3010) a first image of the plurality of images, the first image including a recognized face corresponding to the searched contact.

15. The method of claim 14, further comprising receiving a second input indicating a specific region of the face position designation area, wherein:
the first image further includes the recognized face that is at a location of the first image that generally corresponds to the specific region.
